# FASCICULE DE BREVET EUROPEEN

(11) **EP 1 854 262 B1**
(45) Date de publication et mention de la délivrance du brevet: **14.10.2009**
(21) Numéro de dépôt: 06709244.5
(22) Date de dépôt: 03.02.2006
(51) Int. Cl.: H04L 29/08, G08B 25/10, H04L 12/26, H04L 12/24, H04L 12/28, H04L 12/56, H04L 29/14

(54) **SYSTEME ET PROCEDE DE SURVEILLANCE A DISTANCE INTELLIGENT ET MULTICOMMUNICANT**
INTELLIGENTES FERN-MEHRFACHKOMMUNIKATIONS-ÜBERWACHUNGSSYSTEM UND VERFAHREN
INTELLIGENT REMOTE MULTI-COMMUNICATING SURVEILLANCE SYSTEM AND METHOD

(30) Priorité: 16.02.2005 FR 0501587; 30.06.2005 FR 0506733
(43) Date de publication de la demande: 14.11.2007
(73) Titulaire: LOVRIC, Ivan, 34400 Lunel (FR)
(72) Inventeur: LOVRIC, Ivan, 34400 Lunel (FR)
(86) Numéro de dépôt international: PCT/FR2006/000255
(87) Numéro de publication internationale: WO 2006/087443

(56) Documents cités:
- WO-A-03/036397
- US-A1- 2002 109 611
- US-A1- 2005 088 299
- US-B1- 6 859 831

## Description

La présente invention concerne un système et un procédé de surveillance à distance intelligent et communicant. Elle s'applique, en particulier, à la surveillance de locaux, d'enfants, de personnes âgées et de véhicules.

Les systèmes d'alarme et de surveillance actuels sont complètement centralisés. La centrale d'alarme pilote un certain nombre de détecteurs et communique avec l'extérieur. Si la centrale d'alarme est détruite ou défaillante, le système devient totalement inopérant.

En l'état actuel de l'art et du marché, deux types d'offres sont proposés par les fabricants. D'une part, des systèmes conventionnes, filaires ou non filaires, qui nécessitent l'intervention d'un installateur. Leur coût est élevé, leur sécurité et leur intelligence ne dépend que d'une seule centrale, point névralgique du système. Leur intelligence et le niveau de sécurité qu'elles assurent sont limités à une seule centrale. La centrale sécurisée qui effectue la gestion de protocoles multiples et complexes se base sur une conception totalement sur mesures adaptées aux entreprises.

D'autre part, des produits de e-surveillance dit de première génération » comportent exclusivement des caméras WiFI (acronyme de Wireless Fidelity que l'on peut traduire en français par Réseau local sans files), qui ne peuvent, à l'échelle d'une habitation, constituer un système de sécurité cohérent, complet et intelligent.

La plupart des initiatives dans ce domaine sont issues de sociétés de matériels informatiques. Elles ne proposent qu'un seul type d'éléments de sécurité (caméra WIFI, Caméra/micro WIFI, Sirène WIFI) à intelligence intégrée. Il est possible que, dans un délai assez court, il soit possible de constituer en se basant sur l'emploi d'Internet, des systèmes basiques de sécurité en mode WIFI. Ces système coûteux ne serait en aucun cas complets, intelligents, communicants en multi-mode, et sécurisés (dépendant du seul mode WIFI).

Le document US 2002/109611 décrit un système de gestion de parking qui comporte des détecteurs de véhicules relié à un système de paiement. Lorsqu'un véhicule stationne irrégulièrement, un message indiquant la position de l'infraction peut être transmis à un agent ou au propriétaire du véhicule. Des capteurs de présence d'un véhicule en une place de stationnement communiquent sur un réseau local sans fil comportant au moins une station de base. Un ordinateur central communique sur Internet. Dans des variantes, un ou plusieurs capteurs communiquent directement avec l'ordinateur central.

L'architecture du système est de type hiérarchique à deux ou trois niveaux, selon que des stations de base (« base stations ») sont ou non installées. Ce document ne suggère aucune détection de défaillance ni aucun processus mis en oeuvre dans ce cas.

Le document US 2005/0088299 décrit des réseaux de capteurs basés sur l'identification radiofréquence (RFID), Des lecteurs sans fil de capteurs RF et des dispositifs d'utilisateurs sont couplés à un réseau de communication.

Le document US 6 859 831 décrit un procédé et un appareil pour des réseaux interconnectés de noeuds de capteurs intégrés. Ce document décrit particulièrement un noeud d'une pluralité de noeuds de réseau interconnectés distribués dans un environnement. Ce noeud comporte au moins un capteur qui reçoit des signaux générés dans l'environnement, au moins un dispositif de communication et au moins un pré-processeur traitant des processus en temps réel. Il comporte aussi au moins un processeur de telle manière que le noeud est configurable par l'intermédiaire de plusieurs interfaces d'applications logicielles (API).

Le document WO 03/036397 décrit un procédé d'installation basée sur un protocole sans fil. Il permet l'installation de systèmes domotiques à distance, sans fil. Dans une première application, un téléphone permet d'accéder à une interface utilisateur d'un réseau domotique, interface conservée dans un serveur local en format hypertexte. Dans une deuxième application, une liaison à courte distance (par exemple bluetooth) est relayée par une liaison à longue distance (par exemple téléphonique) pour notifier des événements. Dans une troisième application, des messages (par exemple SMS) servent à télécommander un terminal local.

Cependant, les procédés et dispositifs décrits dans ces quatre documents ne présentent qu'une faible sécurité vis-à-vis d'une panne d'un élément de communication lors du déclenchement d'une alarme.

Les deux premiers aspects de la présente invention visent à remédier à ces inconvénients. A cet effet, d'une manière générale, selon son premier aspect, la présente invention consiste en un système de surveillance à distance selon la revendication 1.

Grâce à ces dispositions, si l'un des éléments « tête de réseau externe » est hors d'état de communiquer à longue distance, un autre élément « tête de réseau externe » assure la communication à longue distance.

Par exemple, le système de surveillance exploite conjointement les technologies de communication à courte portée (par exemple Wifi, marque déposée) et de communication à longue distance, sur réseau électronique (par exemple Internet). Il peut également s'intégrer simplement aux réseaux domotiques déjà en place.

Ainsi, l'innovation réside notamment dans la démultiplication de la fonction de « tête de réseau externe », au sein du système de surveillance, fonction intégrée à tout ou partie des composants du système de sécurité.

On observe que les caractéristiques du système objet de la présente invention rendent aisée son installation, y compris lorsque des composants de sécurité classiques leur sont connectés.

Selon des caractéristiques particulières, au moins un des dits éléments « tête de réseau externe » met en oeuvre le protocole informatique SNMP, pour Simple Network Management Protocol ou protocole de gestion de réseau simple.

On rappelle que ce protocole permet aux administrateurs réseaux de gérer et superviser les équipements informatiques, dans le cadre de l'administration et la gestion des composants d'un système de surveillance.

Selon des caractéristiques particulières, un ou plusieurs capteurs filaires sont directement reliés à un des dits éléments « tête de réseau externe ».

Selon des caractéristiques particulières, au moins un des dits éléments « tête de réseau » comporte un micro-contrôleur incluant son propre dispositif d'alimentation.

Grâce à ces dispositions, chaque dit élément peut être miniaturisé.

Selon des caractéristiques particulières, les éléments du système de sécurité sont répartis en ensembles et, dans chaque ensemble, ils sont adaptés à communiquer avec tous les autres éléments dudit ensemble. Il& sont ainsi « intercommunicants ».

Ainsi, en terme de performance et de potentiel, la grande force du système de surveillance réside, d'une part, dans son niveau d'intelligence, dans la redondance, dans plusieurs éléments, de la fonction « tête de réseau externe » du système et dans le fait que les éléments du système de sécurité sont inter communicants.

Selon des caractéristiques particulières, dans chaque ensemble d'éléments, chaque élément « tête de réseau » est adapté à devenir leader dudit ensemble d'éléments, c'est-à-dire à organiser les communications avec tous les autres éléments dudit ensemble d'éléments.

Ainsi, en cas de défaillance d'un élément leader, un autre élément, au moins, est capable de prendre le relais et de devenir leader.

Selon des caractéristiques particulières, au moins deux éléments « tète de réseau externe » mettent en oeuvre des supports de communication à longue distance différents. Par exemple, des communications sur support WIFI, GSM (acronyme de Global System for Mobile Telecommunications ou système global de téléphonie mobile) ou UMTS (acronyme de Universal Mobile Telecommunications System ou Système universel de téléphonie mobile) peuvent être mis en oeuvre par différents éléments « tête de réseau externe».

Selon des caractéristiques particulières, au moins un des éléments « tête de réseau » est adapté à chiffrer des messages. Par exemple les chiffrements 3DES (acronyme de Digital Encryption System que l'on peut traduire en français par algorithme de chiffrement symétrique à 128 bits) ou AES (acronyme de Advanced Encryption. System que l'on peut traduire en français par Système de chiffrement avancé) peuvent être mis en oeuvre.

Selon des caractéristiques particulières, au moins un élément « tête de réseau externe » est adapté à être interrogé à longue distance et, lorsqu'il est interrogé à longue distance, à émettre une requête à destination de chacun des autres éléments « tête de réseau» du système pour recevoir, en retour, l'état et/ou des informations captées par des capteurs desdits autres éléments.

Ainsi, le système peut être interrogé, supervisé ou commandé à longue distance, sans contrainte de localisation pour ta personne ou le système se trouvant à longue distance.

On observe que les caractéristiques du système de surveillance le rendent évolutif, modulaire et transportable, chaque ajout de matériel étant automatiquement intégré dans le système. De plus, le système de surveillance peut, grâce à ces caractéristiques, être aisément démonté et transféré sur un autre site, par exemple en cas de déménagement de son utilisateur.

Selon des caractéristiques particulières, chaque capteur est associé à un moyen de communication sans fil à courte portée. Grâce à ces dispositions, l'installation du système de surveillance est simplifiée, le nombre de fils nécessaires étant réduit grâce à la communication sans fil à courte portée.

Selon des caractéristiques particulières, chaque capteur est associé à un microcontrôleur. Grâce à ces dispositions, le signal issu du capteur peut être traité localement, soit pour détecter des conditions d'une alarme, soit pour transmettre ce signal, sur requête externe.

Selon des caractéristiques particulières, au moins un élément « tète de réseau externe » est adapté à transmettre à distance un signal d'alarme, en fonction d'un signal issu d'un capteur.

Grâce à ces dispositions, un utilisateur distant peut être informé immédiatement de la survenance de conditions d'une alarme.

Selon des caractéristiques particulières, au moins un élément tête de réseau est adapté à transmettre à distance un signal provenant d'un capteur.

Grâce à ces dispositions, un utilisateur distant peut prendre connaissance et interpréter le signal provenant du capteur, par exemple un signal audio et/ou un signal vidéo.

Selon des caractéristiques particulières, au moins un capteur est un capteur d'image.

Selon des caractéristiques particulières, au moins un capteur est un capteur d'ondes sonores.

Selon des caractéristiques particulières, au moins un capteur d'onde sonore est associé à un contrôleur adapté à effectuer une reconnaissance de la parole.

Selon des caractéristiques particulières, au moins un capteur comporte un bouton poussoir.

Selon des caractéristiques particulières, au moins un des éléments « tête de réseau externe » est une borne ADSL et/ou Wifi, assurant la connectivité à distance sur le réseau internet.

Selon des caractéristiques particulières, au moins un des éléments tète de réseau comporte une interface avec un réseau téléphonique et est adapté à composer un numéro de téléphone.

Selon des caractéristiques particulières, au moins un capteur est un détecteur périmétrique et/ou volumétrique.

Selon un deuxième aspect, la présente invention vise un procédé de surveillance à distance selon la revendication 19.

Les avantages, buts et caractéristiques particulières de ce procédé étant identiques à ceux du système de surveillance tel que succinctement exposé ci-dessus, Ils ne sont pas rappelés ici.

La présente invention concerne aussi un transmetteur audio sans fil à longue distance. Elle s'applique, an particulier, à la transmission unidirectionnelle, par exemple pour la radiodiffusion et à la transmission bidirectionnelle, par exemple la téléphonie.

Les moyens de transmission sans fil à courte portée sont de plus en plus utilisés. Parmi ceux-ci, ceux mettant en oeuvre le standard WIFI (acronyme de Wlreless-Fidellty ou Internet sans-fil 802,11) connaissent un succès considérants et de nombreux ordinateurs portables et les assistants personnel numériques (en anglais PDA, pour personal digital assistant) sont équipés de cette technologie. Toutefois, la nécessité d'utiliser un ordinateur portable ou un assistant personnel pour mettre en oeuvre le standard Wifi rend cette technologie coûteuse lorsqu'il s'agit d'effectuer une fonction simple comme transmettre du son par radio vers Internet pour un faible coût ou lorsqu'il s'agit d'effectuer une simple conversation téléphonique vers un correspondant sur Internet pour un faible coût.

Les transmissions de son sans fil sont désormais classiques dans les micro HF, mais leur inconvénient principal est de transmettre du son modulé en fréquence ou en amplitude, ce qui les rend sensibles aux parasites.

Cet inconvénient a disparu pour partie avec les téléphones mobiles. Toutefois cela suppose l'achat d'un terminal pour un coût parfois élevé, et l'obligation d'un abonnement avec un opérateur. De plus, le son ainsi transmis ne peut pas être envoyé vers internet.

Cette contrainte a été levée avec l'arrivée de moyens au standard WIFI depuis maintenant plusieurs années. Il est donc maintenant possible d'enregistrer un flux audio depuis un micro connecté à un ordinateur ou un assistant personnel PDA et de le transmettre vers Internet via une communication WIFI, si l'ordinateur ou l'assistant personnel PDA est équipé d'une carte WIFI.

L'inconvénient majeur de cette dernière solution est son coût élevé car il faut disposer d'un ordinateur ou d'un assistant personnel PDA uniquement pour transmettre du son. En outre, l'ordinateur et l'assistant personnel PDA consomment beaucoup d'énergie, ce qui induit une décharge accélérée des batteries et une faible autonomie de fonctionnement pour le système.

Certaines solutions embarquées permettent de se passer d'un ordinateur ou d'un assistant personnel PDA pour transmettre du son. Toutefois elles ne permettent pas l'emploi de lecteurs multimédia classiques de type RealPlayer (marque déposée) ou QuickTime (marque déposée) pour écouter le son.

Le troisième aspect de la présente invention vise à remédier à ces inconvénients. Elle propose un « transmetteur audio/Wifi/Internet » unidirectionnel ou bidirectionnel, pour répondre au besoin de transmettre du son par voie hertzienne en utilisant les technologies Wifi et de pouvoir écouter ce son numérisé depuis Internet. La réalisation d'un transmetteur selon le troisième aspect de la présente invention vise aussi à être bon marché et compacte (par exemple un volume à peine supérieur à celui d'un micro HF classique) et à consommer peu d'énergie.

Les transmissions de son sans fil sont désormais classiques dans les téléphones sans fil de type DECT (acronyme de Digital Enhanced Cordless Telephony, pour en français, téléphonie numérique sans-fil améliorée) ou GSM. Mais leur inconvénient principal est d'utiliser des protocoles non compatibles avec internet.

Selon son troisième aspect, la présente invention vise un transmetteur sans fil, **caractérisé en ce qu**'il comporte :
- un capteur de sons,
- un émetteur à courte portée et
- un circuit électronique comportant un unique circuit intégré consistant en un microcontrôleur reprogrammable adapté à mettre en oeuvre un standard de communication à courte portée pour transmettre des paquets de données organisées en transmission de flux de données standardisée à une borne d'accès à un réseau informatique, selon un protocole de communication sur ledit réseau informatique.

Grâce à ces dispositions, puisque le circuit électronique comporte un unique circuit intégré, sa conception, sa fabrication et sa mise en oeuvre sont simplifiées et de faible coût, encombrement et poids. De plus, puisque le microcontrôleur est reprogrammable, le transmetteur peut évoluer et mettre en oeuvre des programmes qui sont différents selon la configuration matérielle et logicielle et selon les besoins de l'utilisateur. Par exemple, des prétraitements peuvent être effectués sur les signaux captés par le capteur de sons.

De plus, en tant que composant reprogrammable, c'est un composant standard du marché et son prix de revient est plus faible qu'un composant spécifique, à capacité de calcul identique.

Par exemple, le standard de communication à courte portée est le standard Wifi, la transmission de flux de données répond au standard RTSP (acronyme de Real Time Streaming Protocol que l'on peut traduire en français par Protocole de flux temps-réels Internet) et le protocole de communication sur un réseau informatique est le protocole pour Internet "IP" pour Internet Protocol.

Grâce à ces dispositions, le transmetteur, intégrant les piles de protocoles Internet et des moyens de transmission de flux de données (streaming RTSP), rend possible l'emploi de lecteurs multimédia classiques de type RealPlayer pour écouter le son.

Selon une variante de son troisième aspect, la présente invention vise un téléphone Wifi/Internet à microcontrôleur sur circuit imprimé pour répondre au besoin de transmettre et de recevoir du son en duplex intégral sur Internet par voie hertzienne en utilisant les technologies de voix sur IP et de Wifi embarquées dans un microcontrôleur standard et largement répandu, par exemple de la famille MICROCHIP (marque déposée). L'usage d'un microcontrôleur standard garantit l'évolutivité de la solution. Les microcontrôleurs sont de plus en plus puissants et incorporent de plus en plus de fonctions (RAM, ROM, EEPROM, conversion analogique/numérique et numérique/analogique). Chaque aspect de la présente invention s'emploie donc à tirer parti de cette puissance et de cette intégration pour obtenir un ensemble miniaturisé, bon marché, et consommant peu d'énergie.

Ainsi, selon des caractéristiques particulières, le microcontrôleur reprogrammable comporte une sortie de signaux sonores destinés à être émis par un transducteur électroacoustique et le microcontrôleur reprogrammable est adapté à mettre en oeuvre un standard de communication à courte portée pour recevoir des paquets de données organisées en transmission de flux de données standardisée depuis ladite borne d'accès à un réseau informatique, selon un protocole de communication sur ledit réseau informatique.

Grâce à ces dispositions, le transmetteur peut être bidirectionnel et faire office de téléphone sans fil sur Internet.

Selon des caractéristiques particulières, le microcontrôleur reprogrammable pilote une carte Wifi depuis une interface PCMCIA ou Personal Computer Memory Card International Association définie par l'Association Internationale des cartes mémoires pour ordinateur personnel ou depuis une carte Compact Flash.

Grâce à ces dispositions, la carte Wifi est de faibles complexité et coût et est aisée à mettre en oeuvre.

Selon des caractéristiques particulières, le microcontrôleur reprogrammable implémente le protocole de flux temps-réels Internet RTSP, ou Real Time Streaming Protocol.

Selon des caractéristiques particulières, le microcontrôleur reprogrammable implémente le protocole Temps-Réel Internet et Protocole de Contrôle Temps Réel Internet RTP/RTCP, ou Real Time Protocol/Real Time Control Protocol.

Grâce à chacune de ces dispositions, la compatibilité avec les standards Internet et multimédias permet au destinataire de diffuser le signal sonore avec de simples lecteurs multimédia tels que RealPlayer et QuickTime plutôt qu'avec des logiciels propriétaires, ce qui aurait été le cas si l'on avait pas utilisé des protocoles standardisés. De plus, cette implémentation se fait avec peu de composants.

Selon des caractéristiques particulières, le capteur de sons est relié à une entrée analogique du microcontrôleur reprogrammable.

Grâce à ces dispositions, on évite un numériseur externe au microcontrôleur et la complexité de réalisation qui en résulterait.

Selon des caractéristiques particulières, le microcontrôleur reprogrammable implémente le protocole de résolution d'adresse ARP ou Address Résolution Protocol.

Selon des caractéristiques particulières, le microcontrôleur reprogrammable implémente le protocole Internet IP, ou Internet Protocol.

Selon des caractéristiques particulières, le microcontrôleur reprogrammable implémente le protocole universel de datagrammes Internet UDP, ou Universal Datagram Protocol.

Selon des caractéristiques particulières, le microcontrôleur reprogrammable implémente le protocole de contrôle de transmision Internet TCP, ou Transmission Control Protocol.

Selon des caractéristiques particulières, le microcontrôleur reprogrammable implémente le protocole de voix sur IP de la norme H323.

Grâce à chacune de ces dispositions, les signaux transmis ou reçu par le transmetteur objet du troisième aspect de la présente invention peuvent être échangés avec des systèmes implémentant des protocoles standards.

En particulier, la compatibilité avec les standards Internet et multimédias permet de mettre en oeuvre le troisième aspect de la présente invention avec des progiciels implémentant la norme H323 largement répandus tels que "Netmeeting" et "Openphone" (marques déposées) plutôt qu'avec des logiciels propriétaires, ce qui aurait été le cas si l'on avait pas utilisé des protocoles standardisés.

Selon des caractéristiques particulières, le microcontrôleur reprogrammable comporte une interface de sortie en modulation de largeur d'impulsion reliée à un filtre passe-bas et met en oeuvre cette interface pour émettre un signal sonore.

Grâce à ces dispositions, la partie émission de signaux sonores est simple, peu onéreuse et fiable.

Selon des caractéristiques particulières, le microcontrôleur reprogrammable implémente une adaptation d'un codec 16 bits pour un échantillonnage sur 8 bits.

Par exemple, le Codec considéré est le codec PCM-uLaw. Grâce à ces dispositions, un microcontrôleur plus simple, de plus faible coût, par exemple limité en ce qui concerne la numérisation/dénumérisation à huit ou dix bits, peut être utilisé.

D'autres avantages, buts et caractéristiques de l'invention ressortiront de la description qui va suivre, faite, dans un but explicatif et nullement limitatif, en regard des dessins annexés dans lesquels
- la figure 1 représente le modèle OSI (couches réseaux) d'un mode de réalisation particulier du système de surveillance objet du premier aspect de la présente invention,
- la figure 2 représente le modèle OSI d'un mode de réalisation particulier du système de surveillance illustré en figure 1 et utilisant également la couche interface réseau pour accéder notamment à d'autres réseaux support de type ADSL et UMTS,
- la figure 3 représente, schématiquement, des relations entre des éléments d'un mode particulier de réalisation d'un système de surveillance conforme au premier aspect de la présente invention, répartis en plusieurs zones surveillées,
- la figure 4 représente, schématiquement, une gestion de communauté d'éléments constituant un mode de réalisation d'un système de surveillance conforme au premier aspect de la présente invention,
- la figure 5 représente, schématiquement, un mode de réalisation particulier du système de surveillance objet du premier aspect de la présente invention,
- la figure 6 représente, schématiquement, un premier mode de réalisation du troisième aspect de la présente invention sous forme de transmetteur audio unidirectionnel,
- la figure 7 représente des couches protocolaires mises en oeuvre par le premier mode de réalisation du troisième aspect de la présente invention illustré en figure 6,
- la figure 8 représente, sous forme de logigramme, des étapes mises en oeuvre par le premier mode de réalisation du troisième aspect de la présente invention illustré en figures 6 et 7,
- la figure 9 représente, schématiquement, un deuxième mode de réalisation du troisième aspect de la présente invention sous forme de transmetteur audio bidirectionnel,
- la figure 10 représente des couches protocolaires mises en oeuvre par le deuxième mode de réalisation du troisième aspect de la présente invention, illustré en figure 9 et
- les figures 11A et 11B représentent, sous forme de logigramme, des étapes mises en oeuvre par le deuxième mode de réalisation du troisième aspect de la présente invention illustré en figures 9 et 10.

Dans toute la description, les termes « élément », « équipement » et « composant » recouvrent les mêmes objets qui font partie d'un système de surveillance et de sécurité.

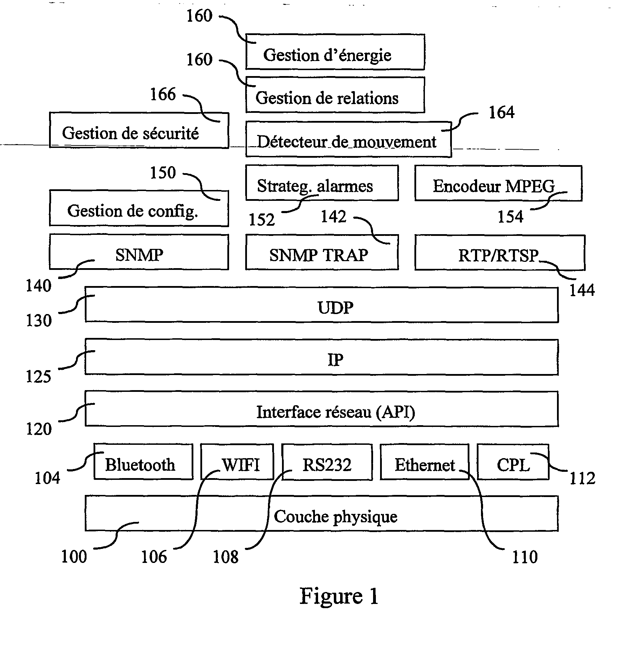

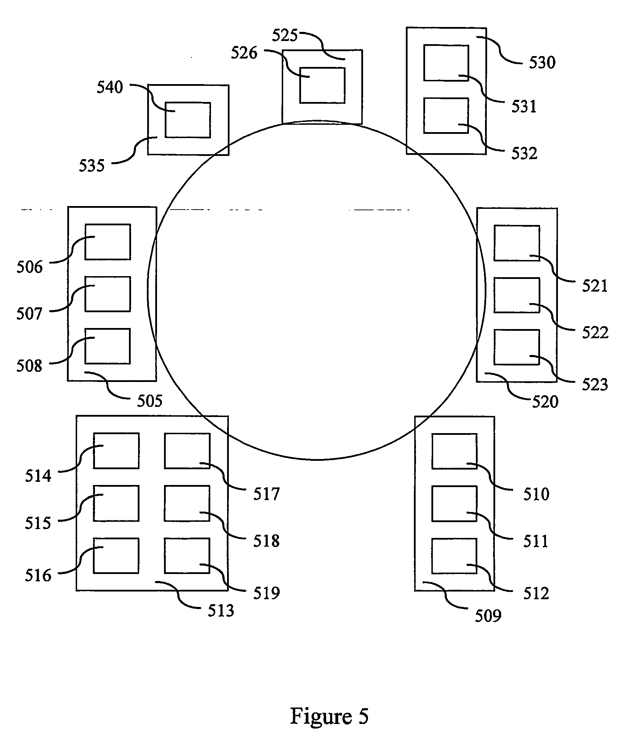

Dans le mode de réalisation du système de surveillance objet du premier aspect de la présente invention qui est décrit dans les figures 1 à 5, en particulier en figure 5, chaque élément du système comporte un module électronique intelligent multi-communiquant. Ce module électronique de pilotage de l'élément possède une intelligence embarquée dans un microcontrôleur et est adapté à communiquer avec plusieurs autres modules et, éventuellement, à longue distance. Dans ce dernier cas, l'élément est dit « tête de réseau externe ». Par exemple, les protocoles de communication qu'il met en oeuvre font partie des protocoles suivants: UMTS, GSM, GPRS, WIFI, WIMAX et BLUETOOTH. Si l'élément ne dispose que de capacités de communication à courte portée, l'élément est dit « tête de réseau ».

Le système d'exploitation mis en oeuvre par chaque module est, par exemple, ucLinux et les applications logicielles embarquées intègrent toutes les fonctions de gestion et pilotage d'une centrale de sécurité, tous les protocoles de communication non filaires, tous les modules de connexion domotique et interfaces d'intégration de cartes de communication.

Chaque module peut être connecté à chaque composant standardisé d'un système de surveillance et de sécurité, par exemple tous types de caméras, micros, alarme, détecteurs d'intrusion, détecteurs d'incendie, bouton poussoir.

Ce module standardisé permet la composition d'un système de surveillance électronique et de sécurité non filaire de nouvelle génération. Il présente les avantages suivants :
- il est doté d'une intelligence inégalée à ce jour,
- il peut être installé par tous types de public, en particulier parce qu'il met en oeuvre des communications sur support non filaire,
- son paramétrage peut être automatique dès la connexion du module à une alimentation électrique,
- il est évolutif, modulaire et transportable,
- il peut être consulté et paramétré à distance, par l'intermédiaire d'ordinateurs connectés au réseau téléphonique par un modem, éventuellement WIFI ou par téléphone mobile,
- il est totalement sécurisé : par exemple, il communique sur un réseau de téléphonie mobile en cas d'interruption de communication sur un réseau de téléphonie filaire. De plus, l'intelligence globale est assurée par chacun des modules du système,
- tous les modules sont inter-communicants.

Dans des variantes, chaque module intègre de l'intelligence artificielle (reconnaissance de forme, reconnaissance vocale, génération automatique de nouvelles stratégies de sécurité par réseaux de neurones ou systèmes experts).

Dans des variantes, on met en oeuvre plusieurs versions du module, dans une logique de métier et d'optimisation économique. Par exemple, dans des variantes, on met en oeuvre deux modules spécifiques, l'un destiné au traitements de signaux audio et vidéo et l'autre à la gestion de détecteurs ou de boutons poussoirs fournissant un signal binaire. La conception de ces deux modules permettrait d'optimiser le poids de l'alimentation et des interfaces domotiques et de réduire le coût total du système.

Ce deuxième module pourrait aussi être intégré à l'intérieur d'un bouton poussoir audio portable afin de contribuer au développement du marché de la surveillance à distance des personnes âgées, enfants ou malades. Ce bouton poussoir audio portable est un bouton d'urgence pour les personnes âgées ou malades : en cas de chute, l'utilisateur appuie sur le bouton et l'alerte est donnée à distance ; selon des variantes, l'utilisateur peut également parler pour décrire son problème et/ou recevoir du son et donc dialoguer avec son interlocuteur.

L'architecture du système de surveillance, l'intégration des technologies de communication et les services proposés participent à la mise en oeuvre du premier aspect de la présente invention.

On observe que la supervision d'un local ou d'une maison, s'apparente énormément à la supervision d'un réseau informatique. En effet, les différents éléments d'un système d'alarme (sirène, détecteur périmétrique, caméra...) sont autant de noeuds d'un réseau.

Pour la mise en oeuvre du premier aspect de la présente invention, le lecteur pourra choisir comme protocole Internet appliqué à la gestion d'un système d'alarme, le protocole SNMP (acronyme de Simple Network Management Protocol pour protocole de gestion de réseau simple).

Préférentiellement, le système de surveillance objet du premier aspect de la présente invention met en oeuvre ce protocole pour l'administration et la gestion des alarmes émanant de chacun des noeuds du réseau d'alarme domotique ou d'entreprise.

Le protocole SNMP peut être supporté nativement par d'autres équipements du réseau domotique (console de jeux, réfrigérateur... ). Tous ces équipements sont alors aptes à être gérés dans le réseau et à générer des alarmes en cas de dysfonctionnement. Ainsi, le système d'alarme et de vidéo surveillance basée sur le protocole SNMP, peut facilement s'intégrer dans un réseau domotique.

La figure 1 représente le modèle OSI (couches réseaux) d'un équipement de surveillance conforme au premier aspect de la présente invention et utilisant le protocole SNMP pour envoyer les alarmes et être administré et supervisé à distance.

On observe, en figure 1, en partant de la couche physique 100, que les standards Bluetooth (marque déposée) (pile de protocoles pour la communication radio point-à-point à courte distance entre périphériques informatiques) 104, Wifi (acronyme de Wireless Fidelity que l'on peut traduire en français par Réseau local sans fils) 106, RS232 108, Ethernet (marque déposée) 110 et CPL (Courants Porteurs en Ligne) 112 peuvent être implémentés par le système de surveillance.

Certains de ces standards sont adaptés à la communication à courte portée, par exemple Bluetooth 104 et wifi 106. D'autres sont adaptés à la communication sur réseau local, par exemple Ethernet 110. RS232 ne sert qu'à paramétrer la borne en mode console, ce qui peut être utile pour un installateur mais non un usager. Les CPL permettent de communiquer avec des éléments reliés à une prise de courant, ce qui constitue une alternative au sans-fil. Les CPL sont assez couramment utilisés en domotique.

Puis, on trouve une couche d'Interface de réseau (en anglais « network interface ») 120, qui permet à l'équipement de dialoguer avec le réseau, et une couche de protocole internet (en anglais « internet protocol ») 125.

Puis, une couche UDP (acronyme de Universal Datagram Protocol que l'on peut traduire en français par protocole de datagrammes internet) 130 (Il s'agit d'un protocole standard d'échanges de paquets sur internet sans contrôle de flux). Puis, en couche suivante, SNMP (acronyme de Simple Network Management Protocol ou protocole de supervision internet) 140, SNMP TRAP (Protocole d'envoi d'alertes SNMP) 142 et RTP/RTSP (Real Time Protocol ou Protocole Internet Temps-Réel, Real Time Streaming Protocol ou Protocole de flux multimédia Temps-Réel) 144 effectuent la supervision des modules et la gestion des alarmes, ainsi que la gestion des flux multimédias provenant des microphones et caméras

Puis, à la couche suivante :
- le gestionnaire de configuration 150 "configuration manager" gère la configuration de l'élément;
- le gestionnaire de stratégies d'alarme 152 implémente une ou plusieurs stratégies d'alarme et
- l'encodeur mpeg 154 effectue un encodage d'images animées au format mpeg.

Enfin, en dernière couche, se trouvent le gestionnaire d'alimentation 160 (en anglais « power manager »), le gestionnaire de relations 162 (en anglais « relationship manager ») le détecteur de mouvement 164 (en anglais « motion détection ») détecte des mouvements, par exemple en comparant les images issues des caméras entre deux intervalles de temps et le gestionnaire de sécurité 166 (en anglais « security manager ») qui gère la sécurité dans les flux d'informations internes et externes du système d'alarme, notamment le chiffrement et l'authentification entre les micros-modules.

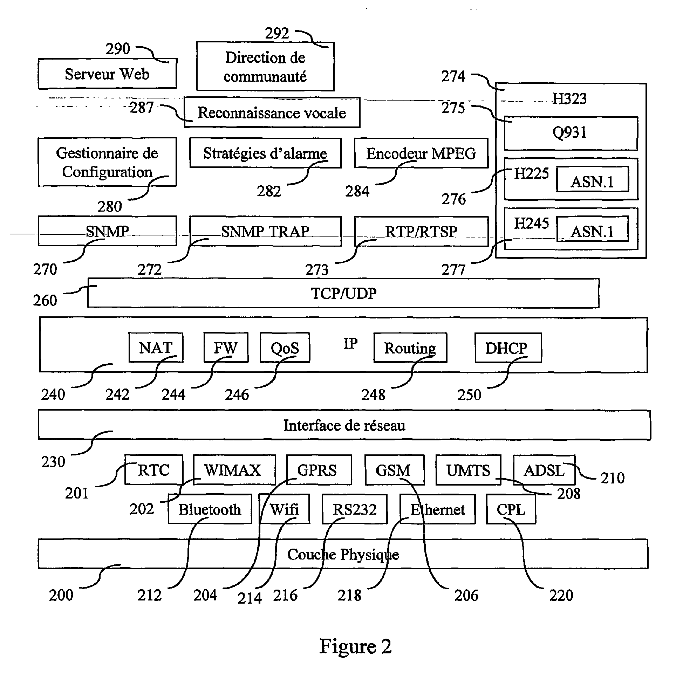

La figure 2 représente le modèle OSI d'un noeud de communication externe utilisant également la couche interface réseau pour accéder notamment à d'autres réseaux support de type ADSL et UMTS.

On observe, en figure 2, en partant de la couche physique 200, que les standards RTC (Réseau Téléphonique Commuté) 201, Wimax (Worldwide Interoperability of Microwave Access ou Accès internet sans fil à longue distance pour usagers fixes ou nomades) 202, GPRS (acronyme de General Packet Radio Service que l'on peut traduire en français par Service d'envoi de paquets de données sur ondes radio) 204, GSM (Global System for Mobile Telecommunications ou système global de téléphonie mobile) 206, UMTS (Universal Mobile Telecommunications System ou Système universel de téléphonie mobile) 208, ADSL (asymetric Digital Subscriber Line ou protocole de transmission numérique asymétrique sur paire torsadée téléphonique) 210, Bluetooth (marque déposée) 212, Wifi 214, RS232 216, Ethernet (marque déposée) 218 et CPL 220 peuvent être implémentés par le système de surveillance. Ces éléments de la même couche sont représentés sur deux lignes différentes, pour des raisons d'encombrement mais correspondent à la même couche de protocoles.

Certains de ces standards sont adaptés à la communication à courte portée, par exemple Bluetooth 212 et Wifi 214. D'autres sont adaptés à la communication sur réseau téléphonique, par exemple GPRS 204, GSM 206 et UMTS 208. D'autres sont adaptés à la communication sur réseau local, par exemple Ethernet 218 et d'autres sont adaptés à la communication distante de données informatiques mettant en oeuvre le protocole d'Internet TCP/IP (Transmission Control Protocol/Internet Protocol ou protocole de contrôle de transmission sur internet), par exemple ADSL 210. Wimax est une extension du Wifi permettant des transmissions sur des grandes portées.

Au dessus de la couche physique 210, et de la couche d'interface réseau 230, une couche de protocole Internet IP 240 est adaptée à mettre en oeuvre les fonctions NAT (acronyme de Network Address Translation ou Translation d'adresses internet) 242, FW (acronyme de Firewall ou pare-feu internet) 244, QoS (acronyme de quality of service que l'on peut traduire en français par qualité de service) 246, Routing (que l'on peut traduire en français par routage de paquets internet) 248 et DHCP (acronyme de Dynamic Host Configuration Protocol ou Protocole de Configuration Dynamique de machine) 250.

Au dessus de la couche IP 240, se trouve une couche TCP/UDP (acronyme de Transmission Control Protocol / Universal Datagram Protocol que l'on peut traduire en français par protocole de contrôle de transmission/protocole de datagrammes internet) 260 (II s'agit de protocoles standards d'échanges de paquets sur internet avec ou sans contrôle de flux). Puis, en couche suivante, SNMP (acronyme de Simple Network Management Protocol ou protocole de supervision internet) 270, SNMP TRAP (Protocole d'envoi d'alertes SNMP) 272, RTP/RTSP (Real Time Protocol ou Protocole Internet Temps-Réel, Real Time Streaming Protocol ou Protocole de flux multimédia Temps-Réel) 273 et H323 274 pour la pile de protocole de voix sur IP qui inclut :
- Q931 275,
- H225 avec encodage ASN.1 PER 276,
- H245 avec encodage ASN.1 PER 277.

Ces couches 270 à 277 effectuent la supervision des modules et la gestion des alarmes, ainsi que la gestion des flux multimédias provenant des microphones et caméras.

Puis, à la couche suivante :
- le gestionnaire de configuration 280 "configuration manager" gère la configuration du réseau local dans lequel est inséré l'élément;
- le gestionnaire de stratégies d'alarme 282 implémente une ou plusieurs stratégies d'alarme et
- l'encodeur mpeg 284 effectue un encodage d'images animées au format mpeg.

Enfin, en dernière couche, se trouve le serveur web 290, qui communique à distance comme un serveur de site de la toile et fournit un site de la toile simplifié pour permettre à un utilisateur lointain de prendre connaissance de l'état du système de surveillance et du résultat des traitements des données issues des capteurs, et la direction ou leader de communauté (en anglais « community leadership ») 292 qui gère la prise de contrôle et l'animation de la communauté.

En termes de services, les équipements de sécurité s'intègrent dans une zone dynamique appelée communauté de sécurité. La communauté regroupe plusieurs zones physiques qui peuvent couvrir des espaces différents (chambre, maison, lotissement...) et qui définissent des ensembles d'éléments capables de communiquer entre eux. Les équipements de sécurité s'intègrent dans cette communauté de façon dynamique après un processus d'inscription via un site Web au cours duquel sont examinés les points suivants :
- capacités techniques de l'équipement,
- capacités fonctionnelles de l'équipement et
- droits de l'équipement dans la communauté de sécurité.

L'équipement "leader" de la communauté décide alors du rôle du nouvel équipement dans la communauté, ainsi que des droits qui lui seront affectés en matière de sécurité et de bande passante. La décision s'opère par modification des stratégies de sécurité pour y ajouter le nouvel équipement et préciser son rôle. La modification de la stratégie s'opère depuis le site Web du leader de communauté où sont précisées toutes les interactions entre les composants.

Ensuite le leader de communauté délivre un nouveau certificat de sécurité au nouvel équipement (en effectuant une requête interne au registration manager). Ce certificat étant conforme à la PKI (Public Key Infrastructure) du système de sécurité, le nouvel équipement pourra chiffrer et déchiffrer les messages dans la communauté de sécurité.

Un échange de certificats de sécurité assure ensuite le chiffrement des échanges futurs entre l'équipement et le reste de la communauté. Ces certificats peuvent être à clés symétriques ou à clés asymétriques.

L'équipement leader de communauté est administré à partir d'un site Web, mais dispose d'un paramétrage par défaut lui permettant d'accepter automatiquement des équipements présentant des garanties en termes de sécurité compatibles avec les stratégies de sécurité prédéfinies.

Selon les capacités techniques de l'équipement client, des stratégies de sécurité sont téléchargées à l'intérieur de l'équipement lui-même, ce qui lui permet ensuite de savoir de quelles façon traiter les stimuli issus des capteurs, et comment dialoguer avec les équipements avoisinants dans la zone de sécurité.

Un mode de réalisation préférentiel du système de surveillance objet du premier aspect de la présente invention combine des technologies de télécommunications, vidéo, microélectronique, et informatique.

En effet, les réseaux supports sont multiples (UMTS, ADSL, Wifi...) et sont interfacés avec chaque équipement du système de sécurité via une interface réseau. Cette interface sait gérer la grande diversité des réseaux supports et dialogue avec les couches de service supérieures grâce aux sockets TCP/IP et UDP.

Ensuite, le système d'exploitation de l'équipement gère l'encodage vidéo. Le chiffrement lors des échanges avec les autres éléments dits « tête de réseau » est assuré par le security manager.

La microélectronique permet à la fois l'intégration des composants logiciels du système d'exploitation uCLinux (marque déposée) sur un microcontrôlleur de type DragonBall (marque déposée) ou ATMEL (marque déposée), le pilotage des capteurs de sécurité (vidéo ou autre) par le leader de communauté associé aux stratégies de sécurité, et le contrôle de l'alimentation du module d'alarme par le power manager.

Le développement informatique intervient également dans les modules de services évolués illustrés en figures 1 et 2, tels qu'un gestionnaire de stratégies « Strategies Manager », le serveur de la toile 290 « Web server », le gestionnaire de la communauté 292 « Community Leadership », le détecteur de mouvement 164 « Motion detection » et un module de reconnaissance vocale « Speech Recognition » 287. Préférentiellement, chaque micro-module contient un microphone intégré susceptible de reconnaître des chiffres, ainsi il est possible de s'authentifier par code en prononçant une séquence de chiffres, de mots ou une phrase prédéfinies.

La structure du système de surveillance s'appuie sur des périphériques équipés d'une interface Wifi ayant chacun un rôle précis, par exemple :
- détecteur Statique (DS) (relié à un détecteur communiquant ou un noeud de communication externe par voie filaire.) ; il s'agit par exemple d'un contact d'ouverture de porte
- détecteur statique reconfigurable (DR), par exemple détecteur pouvant être reconfiguré à distance, (relié à un détecteur communiquant ou un noeud de communication externe par voie filaire.) ; il s'agit par exemple d'un détecteur infrarouge passif dont la sensibilité peut être modifiée.
- détecteur reconfigurable communiquant (DRC), par exemple détecteur pouvant dialoguer avec d'autres équipements,
- détecteur relais communiquant (DReC), par exemple détecteur pouvant router les informations entre plusieurs zones,
- détecteur Vidéo MPEG (DV) qui assure l'encodage des vidéos et le streaming (la transmission de flux vidéo),
- détecteur Audio (DA) qui assure l'encodage du son et le streaming (la transmission de flux audio),
- module d'intelligence artificielle (MIA) qui assure la reconnaissance vocale ou la reconnaissance de forme dans une image, selon le type de détecteur auquel il est couplé,
- Noeud de communication externe (NC) au élément tête le réseau externe, qui assure l' interconnexion avec le monde extérieur.

Tout détecteur communicant est un élément « tête de réseau ».

Les détecteurs sont placés dans des communautés de sécurité décrites ci-après. Les communautés de sécurité mettent en commun un réseau IP de sécurité mutti-zones. Les périphériques précédemment cités sont placés dans les différentes zones de sécurité et communiquent entre eux et avec les noeuds de communication externe selon leurs capacités techniques et selon les paramétrages définis dans les stratégies de sécurité.

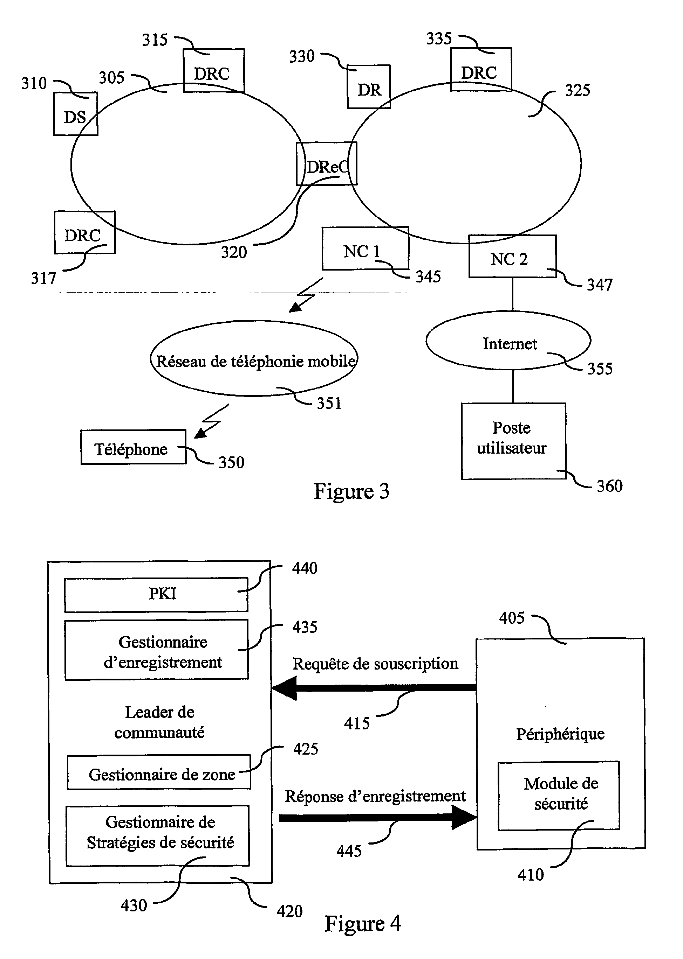

On observe, en figure 3, un exemple de système conforme au premier aspect de la présente invention. Il comporte deux zones ou ensembles d'éléments 305 et 325, un téléphone 350, le réseau Internet 355 et un terminal distant 360 relié au réseau Internet 355. La première zone 305 est munie d'un détecteur Statique (DS) 310 et de deux détecteurs reconfigurables communiquants (DRC) 315 et 317. Un détecteur relais communiquant (DReC) 320 relie les zones 305 et 325. La zone 325 est munie d'un détecteur reconfigurable (DR) 330, d'un détecteur reconfigurable communiquant (DRC) 335, et de deux noeuds de communication externe (NC1 et NC2) 345 et 347. Le noeud de communication externe 345 relie le système de surveillance au téléphone 350 par l'intermédiaire d'un réseau de téléphonie mobile 351. Le noeud de communication externe 347 relie le système de surveillance au réseau Internet 355 et, par son intermédiaire, au terminal distant 360.

Avant de pouvoir être membre d'une communauté de sécurité, un périphérique doit d'abord s'enregistrer auprès du leader de la communauté. Les périphériques ne disposant pas d'un module de sécurité ont des droits restreints à la communauté. Après inscription d'un nouvel équipement, le leader avertit l'ensemble des membres de la communauté de l'arrivée d'un nouvel équipement afin de mettre à jour les stratégies de sécurité.

Comme on l'observe en figure 4, le périphérique 405, qui met en oeuvre un module de sécurité 410, émet d'abord une requête de souscription 415 à destination du leader de la communauté 420, qui peut être un noeud de communication externe ou un détecteur, par exemple. Le leader de communauté 420 met en oeuvre un gestionnaire de zone 425, un gestionnaire de stratégies de sécurité 430, un gestionnaire d'enregistrement 435 et une mémoire de certificats de clés asymétriques PKI 440.

En réponse à la requête 415, le leader de communauté 420 retourne une réponse d'enregistrement 445 au périphérique 405.

Le réseau IP de sécurité supporte différentes classes de services

| Classe | Niveau de priorité |
|---|---|
| - Alarme TRAP (SNMP TRAP) | 20 |
| - Alarme Config (SNMP Supervision) | 18 |
| - Vidéosurveillance | 16 |
| - Voix sur IP | 14 |
| - Streaming Video HQ (Haute Qualité) | 12 |
| - Données | 10 |
| - Streaming Video Standard | 8 |

La priorité est donnée aux services de sécurité, mais ces services occupant généralement peu de bande passante, le réseau IP peut être utilisé pour d'autres classes de service. Ainsi, il est possible d'utiliser le réseau de sécurité pour véhiculer des flux domotiques tels que voix sur IP, vidéo, voix téléphonique, etc....

On observe, en figure 5, un système de surveillance à distance 500, qui comporte :
- un élément « tête de réseau externe », ou noeud de communication externe, 505 comportant
   . un moyen de communication à longue distance 506,
   . un moyen de communication sans fil à courte portée 507 et
   . un microcontrôleur 508 ;
- un élément « tête de réseau externe », ou noeud de communication externe, 509 comportant
   . un moyen de communication à longue distance 510,
   . un moyen de communication sans fil à courte portée 511 et
   . un microcontrôleur 512 ;
- un élément « tête de réseau externe », ou noeud de communication externe, 513 comportant
   . un moyen de communication à longue distance 514,
   . un moyen de communication sans fil à courte portée 515 et
   . un microcontrôleur 516 ;
   . un capteur d'image 517 ;
   . un capteur de sons 518 et
   . un détecteur d'incendie 519 sortant un signal binaire ;
- un détecteur reconfigurable 520 comportant un microphone 521,un microcontrôleur 522 et un moyen de communication sans fil à courte portée 523 ;
- un détecteur statique 525 comportant un capteur infrarouge 526 ;
- un détecteur statique 530 comportant un capteur d'intrusion 531, un microcontrôleur 532 et
- un émetteur de signaux infrarouges 535 à bouton poussoir 540.

On suppose que tous les moyens de communication à courte portée mettent en oeuvre le standard Wifi.

L'élément « tête de réseau externe » 505 est, par exemple, une borne Wifi. Le moyen de communication à longue distance 506 est, par exemple, un modem à haut débit. Le microcontrôleur 508 conserve en mémoire et met en oeuvre les modules logiciels décrits en regard des figures 1 à 4. Par défaut, l'élément « tête de réseau externe » 505 est l'élément leader de la communauté d'éléments illustrée en figure 5.

Le moyen de communication à longue distance 511 est, par exemple, un modem à bas débit Le microcontrôleur 513 conserve en mémoire et met en oeuvre les modules logiciels décrits en regard des figures 1 à 4. Par défaut, l'élément tête de réseau 510 n'est pas l'élément leader de la communauté d'éléments illustrée en figure 5 mais le devient en cas de défaillance de l'élément « tête de réseau externe » 505.

Le moyen de communication à longue distance 516 est, par exemple, un module de communication de téléphonie mobile. Le microcontrôleur 518 conserve en mémoire et met en oeuvre les modules logiciels décrits en regard des figures 1 à 4 et, en particulier, le module d'encodage au format mpeg, pour encoder les images captées par le capteur d'image 519, lorsqu'une communication à longue distance a été établie avec le système de surveillance 500.

Par défaut, l'élément « tête de réseau externe » 515 n'est pas l'élément leader de la communauté d'éléments illustrée en figure 5 mais le devient en cas de défaillance des deux éléments « tête de réseau externe » 505 et 510.

Les microcontrôleurs 522 et 532 conservent en mémoire et mettent en oeuvre les modules logiciels décrits en regard des figures 1 à 4, à l'exception de ceux qui concernent la communication à longue distance et la gestion de la communauté.

Le capteur infrarouge 526 est adapté à détecter les signaux émis par l'émetteur infrarouge 535 lorsqu'un utilisateur appuie sur le bouton poussoir 540.

Le capteur d'intrusion 531 est de type connu, par exemple un détecteur volumétrique ou périmétrique.

Par défaut, les différents éléments du système de surveillance fonctionnent en mode dit "infrastructure", dans lequel tous les éléments communiquent uniquement avec le leader de la communauté. En cas de défaillance du leader, les autres éléments passent automatiquement en mode "adhoc" dans lequel, ils communiquent tous entre eux.

Ainsi, les éléments « têtes de réseau » sont adaptés à communiquer entre eux et avec chaque détecteur ou capteur, par l'intermédiaire de leurs moyens de communication sans fil à courte portée.

Au moins un des éléments « têtes de réseau externe » est adapté à communiquer à longue distance, par l'intermédiaire de son moyen de communication à longue distance, en fonction de l'état de chaque autre élément « tête de réseau » et en fonction du signal fourni par au moins un capteur.

Par exemple, l'élément « tête de réseau externe » 510 communique à longue distance lorsque l'élément « tête de réseau externe » 505 est défaillant (ce que l'élément 510 détecte lorsqu'il ne réussit pas à entrer en communication avec l'élément 505) et l'élément « tête de réseau externe » 515 communique à longue distance lorsque les éléments «tête de réseau externe » 505 et 510 sont défaillants.

La communication à longue distance est établie, soit à l'initiative du système de surveillance (en cas de détection d'événement prédéterminé comme, par exemple, un appui sur le bouton poussoir 540, la détection d'une intrusion ou la reconnaissance d'un appel au secours dans une voix captée par le microphone), soit à l'initiative d'un tiers distant, par exemple, par accès au serveur web de l'élément « tête de réseau externe » 505 ou à celui de l'élément « tête de réseau externe » 510 ou par appel téléphonique du moyen de communication à longue portée 516.

On observe que, parmi les capteurs auxquels le module électronique intelligent multi-communiquant peut être associé, se trouvent :
- les détecteurs périmétriques,
- les contacts magnétiques,
- les détecteurs de chocs...
- les détecteurs Volumétriques :
   - à radars,
   - à infra-Rouge...
- les détecteurs d'incendie, inondation... ,
- les caméras Video et
- les microphones.

Le système peut aussi être connecté, localement à une ou plusieurs sirènes, haut-parleurs, gyrophares, par exemple, pour prévenir les résidents de la survenance d'un événement prédéterminé détecté par l'un des modules, en application de la stratégie de sécurité choisie par l'utilisateur.

En ce qui concerne la procédure de sélection du module de « tête de réseau externe » mis en oeuvre pour communiquer à distance, une stratégie de sécurité "PrioritéCommunication" établit le niveau de priorité pour la communication locale et à distance.

Chaque module possède un identifiant unique (adresse MAC) et la stratégie de sécurité contient une table avec les champs suivants :

| "Identifiant module" | "Libellé" | "Priorité comm locale" | "Priorité comm distante" |
|---|---|---|---|
| 0a:ab:cd:12:34:56 | Caméra1 | 100 | 70 |
| 0a:ab:cd:12:34:57 | Microphone1 | 90 | 80 |
| 0a:ab:cd:12:34:58 | Sirène1-GSM | 80 | 90 |
| 0a:ab:cd:12:34:59 | PIR1-RTC | 70 | 100 |
| 0a:ab:cd:12:34:60 | PIR2 | 60 | 60 |

Dans cet exemple, le leader de communauté est le module "Caméra1" qui a la priorité maximale en communication locale ; si il venait à être défaillant, le module "Microphone1" prendrait le relais en tant que leader de communauté.

La communication distante est prioritairement le RTC avec le module PIR1, ensuite vient le GSM. Tous les autres modules ont encore la possibilité de communiquer par internet si les modules GSM et RTC étaient défaillants.

On observe que rien n'empêche d'avoir plusieurs stratégies "communication" différentes qui soient activées selon des critères variés comme le calendrier, le mode d'alarme, total ou restreint ...

En ce qui concerne la procédure de détection de la défaillance d'un module, le leader de communauté envoie périodiquement des requêtes de supervision SNMP vers chacun des membres de la communauté pour obtenir des informations sur leur état de fonctionnement.

Chaque module possède une MIB (Management Information Base ou base d'information de gestion) SNMP qui le caractérise. Ainsi, un module avec Infra-Rouge Passif (PIR) avec capacité de communication RTC, aura une MIB différente d'un module avec Microphone.

Par exemple la MIB du module "PIR1-RTC" contiendra les infos suivantes :
- Etat de la ligne RTC : Désactivé, Activé, Absent,
- Etat des batteries : Fort, Moyen, ou Faible,
- Etat du détecteur PIR : Désactivé, Activé, Carrillon,
- Date/Heure dernière alarme: 12 avril 2005, 11:36,
- Nombre d'alarmes depuis l'activation du système: 3,

Le leader de la communauté peut décider de désactiver ou de modifier le comportement de certains capteurs selon le paramétrage des stratégies de sécurité.

Dans l'exemple précédent, le leader de communauté peut, par exemple, décider que le détecteur PIR sera en mode carillon de 10h à 12h, signifiant ainsi que la sirène émet un bruit de carillon quand quelqu'un entre dans la pièce en guise d'accueil.

En ce qui concerne la procédure de gestion de la sécurité appliquée par le leader de communauté aux autres modules.

Les stratégies de sécurité sont dupliquées dans tous les modules, ce qui permet au système de se recomposer en cas de défaillance du leader ou d'un des modules.

Le mode de recomposition pour la communication est défini dans la stratégie "PrioritéCommunication".

Une stratégie de sécurité utilise un langage macro décrivant les interactions entre les capteurs:

```
      Par exemple :
      Stratégie "DétectionMouvement"
      Si Caméra1.DetecteMouvement
        Si Heure > 10:00 et Heure <17:00
         Microphone1.DemanderAuthentification
           Si Microphone1.AuthentificationOK
             Sirène1-GSM.Carillon
           Sinon
             Sirène1-GSM.Hurle
            LancementCommunicatiDistanteAlarme
          fin
         Exception (Microphone1 ne répond pas à l'ordre, il est peut-être défaillant)
          si PIR2.DétecteMouvement
            Sirène1-GSM.Hurle
            LancementCommunicationDistanteAlarme
          sinon
            LancementCommunicationDistanteDefaillance(Microphone1)
          fin
       Sinon
         Sirène1-GSM.Hurle
         LancementCommunicatiDistanteAlarme
       fin
     fin
```

Il est possible d'appeler une stratégie depuis une autre stratégie ainsi "DétectionMouvement" appelle la Stratégie "LancementCommunicationDistanteAlarme" pour déclencher l'alerte à l'extérieur

Il est possible de générer les stratégies de façon ergonomique depuis un site Web, ce qui évite de devoir écrire les lignes de la macro manuellement.

En terme d'utilisation, la mise en oeuvre de cette technologie est d'une grande simplicité. Les étapes de cette utilisation sont, par exemple, les suivantes :
1) L'installation d'un système de sécurité nécessite de disposer d'une borne WIFI ou d'un boîtier FREEBOX (marque déposée) ou LIVEBOX (marque déposée), avec abonnement, sur le site à surveiller.
2) En fonction de l'installation que l'on souhaite réaliser, on prend sur le marché les composants de sécurité les plus standardisés possibles, et donc les moins coûteux : dans l'exemple: Caméras, Détecteurs d'intrusion, Sirène, Détecteur d'incendie.
3) On choisit les deux modes de communication de référence du système, qui seront les modes de communication, par exemple WIFI et GSM (cartes à insérer dans chaque contrôleur).
4) On place les composants de sécurité aux endroits appropriés et on connecte manuellement un module contrôleur, à chaque composant de sécurité.
5) On se connecte par Internet, à un site de la toile dédié et on obtient instantanément un système de sécurité qui se paramètre automatiquement par défaut.
6) On peut, sur le site en question, introduire tous les paramètres propres à chaque composants (zones) ainsi que toutes les stratégies de sécurité spécifiques choisies.

Ainsi, doté de sa propre intelligence, d'une intelligence globale système, le système de sécurité appliquera une stratégie de sécurité définie par les soins de l'utilisateur. Par exemple, l'activation d'un détecteur d'intrusion pourra être contrôlée par les autres capteurs et, en cas de confirmation, cela déclenchera, par exemple, l'activation de la sirène d'alarme, l'activation de la caméra, l'enregistrement d'images vidéo, l'activation du micro, l'envoi d'images et de son sur le site et/ou sur un téléphone fixe ou mobile, l'envoi de minimessages SMS...

On décrit, ci-après, des applications du système de surveillance objet du premier aspect de la présente invention.

Application à la surveillance des enfants et des personnes âgées à distance. Les éléments mis en oeuvre sont, par exemple :
- Caméras Wifi et Caméras réseaux,
- Micros Wifi et téléphones Wifi,
- Boutons poussoirs Wifi ou radio et
- Borne ADSL/Wifi assurant la connectivité internet.

A distance, la consultation s'effectue depuis un ordinateur ou un téléphone portable et des alertes SMS ou MMS sont envoyées lors de l'appui sur un bouton poussoir d'urgence.

Application à la surveillance de la maison. Les éléments mis en oeuvre sont, par exemple :
- Caméras Wifi et Caméras réseaux,
- Micros Wifi,
- Détecteurs périmétriques et volumétriques Wifi ou filaires et
- Borne ADSL/Wifi assurant la connectivité internet,

A distance, la consultation s'effectue depuis un ordinateur ou un téléphone portable et, lors d'une intrusion des alertes sont envoyées par SMS, MMS, ou par appel sur téléphone mobile.

Application à la surveillance discrète de personnes ou de locaux. Les éléments mis en oeuvre sont, par exemple :
- Caméras Wifi ou radio miniatures,
- Micros Wifi ou radio miniatures,
- Borne ADSL/Wifi assurant la connectivité internet et
- Récepteur Wifi/Radio situés à proximité des émetteurs.

A distance, la consultation s'effectue depuis un ordinateur ou un téléphone portable et l'écoute peut aussi s'effectuer à proximité au moyen d'un Récepteur Wifi/Radio.

Application à la surveillance des véhicules. Les éléments mis en oeuvre sont, par exemple :
- Caméras réseau miniatures,
- Micros,
- Alarme périmétrique ou volumétrique classiques et
- Tête de réseau externe GSM assurant la connectivité vers le réseau GSM/UMTS.

A distance, la consultation s'effectue depuis un ordinateur ou un téléphone portable et une caméra permet de visualiser l'intérieur du véhicule et une autre visualise l'environnement permettant ainsi la localisation du véhicule.

D'autres applications concernent la sécurité des biens et des personnes, la surveillance à distance des personnes âgées, d'enfants, de malades, la surveillance de processus industriels, ...

Comme on le comprend à la lecture de la description qui précède, la mise en oeuvre du premier aspect de la présente invention permet de réaliser un système de surveillance électronique de deuxième génération, dans lequel chaque élément possède une intelligence propre localisée dans un microcontrôleur. Le système est capable de se recomposer, c'est-à-dire de changer de structure et de leader, au cas où un ou plusieurs des éléments seraient défaillants ou détériorés. Le système peut s'intégrer simplement aux réseaux domotiques déjà en place.

Ce système de surveillance est évolutif par mise à jour du firmware, c'est-à-dire des logiciels propriétaires, du microcontrôleur. Il est, par exemple, possible de télécharger une mise à jour permettant de reconnaître une phrase clé plutôt que des chiffres pour s'authentifier, sans pour autant devoir acheter un nouveau système.

Les microcontrôleurs sont de plus en plus puissants et incorporent de plus en plus de fonctions (RAM, ROM, EEPROM, conversion analogique/numérique et numérique/analogique). La mise en oeuvre du troisième aspect de la présente invention s'emploie à tirer parti de cette puissance et de cette intégration pour obtenir un ensemble miniaturisé, bon marché, et consommant peu d'énergie.

Selon des variantes du procédé et du dispositif objets des deux premiers aspects de la présente invention :
- le système peut être enrichi de nouvelles fonctions par simple téléchargement de versions logicielles, par exemple Clans une version, le chiffrement des messages réalisé en 3DES, et un simple téléchargement peut permettre d'activer le chiffrement en AES ;
- on prévoit un armement par reconnaissance vocale : le système est équipé d'un capteur d'ondes sonores apte à effectuer une reconnaissance de la parole. Cette fonction peut être utilisée pour commander vocalement l'armement ou le désarmement du système selon un code ou une phrase clé ou par reconnaissance de la voie de quelques utilisateurs autorisés ;
- le protocole informatique standard SNMP peut être utilisé pour la supervision du système et la gestion d'alarmes, mais d'autres protocoles peuvent aussi convenir. Par exemple, dans le cas d'une implémentation du community leader et des stratégies de sécurité utilisant JAVA, le protocole RMI peut remplacer SNMP pour le transfert d'informations de supervision et d'alarme entre les microcontrôleurs ;
- au moins un actionneur peut être relié à chaque microcontrôleur, un actionneur pouvant être une sirène, un gyrophare, ou bien un volet roulant, un ventilateur de désenfumage, par exemple. Ces actionneurs sont activés selon les stratégies de sécurité définies dans le système.

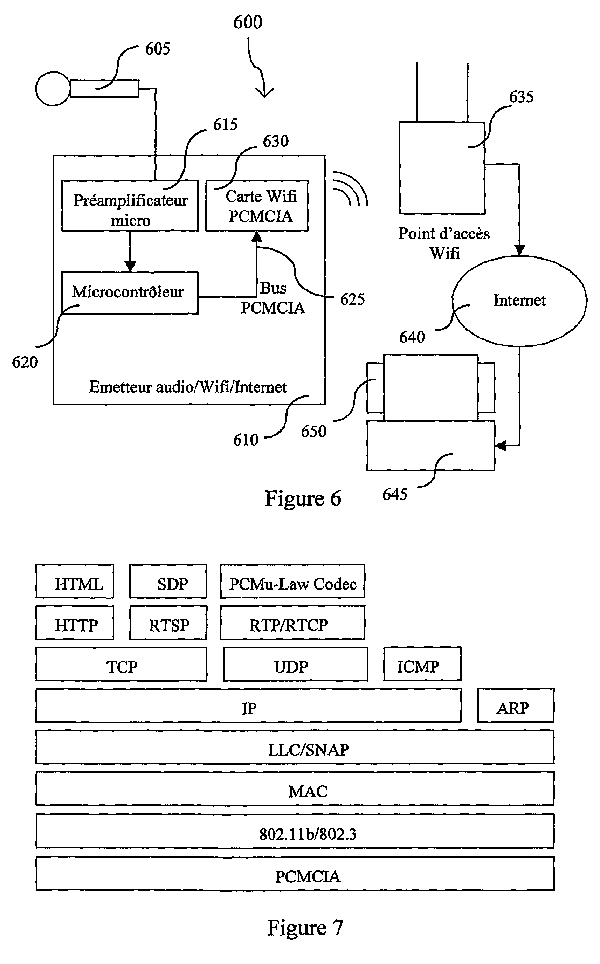

On observe, en figure 6, un premier mode de réalisation du troisième aspect de la présente invention, sous forme d'un transmetteur audio unidirectionnel 600. Ce transmetteur 600 est relié à un microphone 605 et comporte, dans un circuit électronique ou module émetteur audio/Wifi/Internet 610, un préamplificateur 615, un microcontrôleur 620, un bus PCMCIA (acronyme de Personal Computer Memory Card International Association que l'on peut traduire en français par Association Internationale des cartes mémoires pour ordinateur personnel) 625 et une carte Wifi PCMCIA 630. Les signaux émis par la carte Wifi PCMCIA 630 sont reçus par un point d'accès Wifi 635 et transmis, par l'intermédiaire du réseau informatique Internet 640, à un ordinateur 645 comportant des haut-parleurs 650.

De manière caractéristique, le circuit électronique 610 comporte un unique circuit intégré consistant en le microcontrôleur 620.

Dans le mode de réalisation particulier illustré en figure 6, le microcontrôleur 620 est de type reprogrammable, par exemple de la famille PIC18F. II se charge de numériser le signal sonore provenant du microphone 605, par l'intermédiaire du préamplificateur 615 et de piloter la carte Wifi 630 depuis une interface PCMCIA ou Compact Flash.

Le signal Wifi issu du module émetteur 610 est capté par la borne Wifi 635 qui se charge de le relayer vers Internet 640. Un ordinateur 645 équipé d'un lecteur RealPlayer ou QuickTime peut alors jouer le son reçu depuis Internet 640.

Le transmetteur illustré en figure 6 présente une importante miniaturisation de sa partie mobile, c'est-à-dire le module émetteur 610, tout en utilisant des composants et des protocoles standardisés. En outre, l'intelligence du système est répartie entre le microcontrôleur 620, qui gère les protocoles Internet et la numérisation du son, et la carte Wifi 630, qui gère la transmission sans fil (en anglais "wireless"). Le fait d'utiliser un microcontrôleur 620 de la famille Microchip (marque déposée) PIC 18F autorise une évolutivité accrue et aisée des fonctionnalités du transmetteur audio sans fil. Ce module émetteur 610 implémente les protocoles RTSP RTP/RTCP (acronyme de Real Time Protocol/Real Time Control Protocol que l'on peut traduire en français par Protocole Temps-Réel Internet et Protocole de Contrôle Temps Réel Internet) avec peu de composants.

Cette compatibilité avec les standards Internet et multimédias permet de mettre en oeuvre le troisième aspect de la présente invention avec de simples lecteurs multimédia tels que RealPlayer et QuickTime plutôt qu'avec des logiciels propriétaires, ce qui aurait été le cas si l'on avait pas utilisé des protocoles standardisés.

Le microphone 605 est constitué d'une pastille électret qui amplifie déjà le signal par un transistor interne. Les signaux audio sont ensuite transmis au pré-amplificateur micro 615 dont le rôle est d'amplifier le signal avant de le transmettre au microcontrôleur 620.

Le préamplificateur micro 615 est classique : il n'inclut qu'un seul transistor NPN BC548 polarisé en tension sur sa base avec un condensateur de découplage.

Le microcontrôleur 620, de type PIC18F452 de Microchip, dispose d'une capacité de 32 koctets de mémoire morte ROM et d'une mémoire vive RAM dynamique de 1536 octets. Il dispose en outre de huit entrées analogiques et de trente quatre ports d'entrées-sorties. Le microcontrôleur 620 utilise huit lignes de données pour transmettre vers ou recevoir des données de la carte PCMCIA et onze lignes d'adresses. II y a par ailleurs six lignes de contrôle qui permettent de piloter la carte ou de recevoir des informations de contrôle. Dans le cas du mode de réalisation particulier illustré en figure 6, on n'utilise qu'un seul port analogique sur lequel est transmis le signal audio pré-amplifié.

Le microcontrôleur 620 est relié à la carte Wifi 630 par l'intermédiaire d'une interface PCMCIA qui permet de connecter des cartes Wifi PCMCIA ou compact flash (marque déposée) par l'intermédiaire d'un adaptateur. En ce qui concerne l'interface WIFI, le mode de réalisation illustré en figure 6 est compatible avec le circuit imprimé chipset WIFI Prism II d'Intersil (marque déposée) et fonctionne avec des cartes équipées de ce chipset.

Les fonctions nécessaires au dialogue entre le microcontrôleur 620 et le circuit imprimé chipset Prism II sont implémentées sur la base de la documentation technique décrivant le logiciel propriétaire (en anglais "firmware") "PRISMII".

En ce qui concerne la pile de protocoles Internet, le module de transmission audio supporte les protocoles Internet suivants :
- ARP (acronyme de Address Resolution Protocol que l'on peut traduire en français par Protocole de Résolution d'Adresses) pour la résolution d'adresse,
- IP (acronyme de Internet Protocol pour protocole Internet),
- ICMP (acronyme de Internet control message protocol, pour protocole de messages de contrôles Internet),
- UDP (acronyme de Universal Datagram Protocol que l'on peut traduire en français par Protocole Universel de Datagrammes Internet),
- TCP (acronyme de Transmission Control Protocol que l'on peut traduire en français par Protocole de contrôle de transmission Internet),
- HTTP (acronyme de Hypertext Transfer Protocol que l'on peut traduire en français par Protocole de transfert hypertexte Internet),
- RTSP et
- RTP/RTCP.

Etant donné l'espace mémoire réduit dans le microcontrôleur, seule une implémentation simplifiée de ces protocoles est effectuée dans le mode de réalisation illustré en figure 6. Cette pile de protocoles réduite et optimisée est représentée en figure 7 qui montre la manière dont se superposent les couches protocolaires.

En ce qui concerne l'étage d'alimentation, le transmetteur peut être alimenté au moyen d'une pile 9 volts, dont l'essentiel de l'énergie est consommée par la carte Wifi.

Toute autre type d'alimentation de type 9 Volts régulée peut convenir.

En ce qui concerne la mise en oeuvre du troisième aspect de la présente invention, un transmetteur a été testé avec succès en utilisant une carte Wifi Netgear (marque déposée) MA401 et une carte Wifi Inventel Airline (marques déposées) SN11 P, chacune de ces cartes étant équipée du circuit imprimé Chipset Prism II (Marque déposée).

La communication vers Internet s'effectue au travers d'un point d'accès Wifi. Dans le mode de réalisation testé, ce point d'accès est une borne AP1200 de Cisco (marque déposée) mais n'importe quel autre routeur Wifi 802.11 B peut être utilisé.

On observe que, dans une variante du troisième aspect de la présente invention, la communication Wifi peut exploiter le mode « Ad-hoc » plutôt que le mode Infrastructure. Dans ce cas, la communication s'effectue en point à point avec un correspondant situé à proximité, et une borne Wifi relais n'est plus nécessaire.

Les ordinateurs reliés au point d'accès en même temps que le module de transmission audio dialoguent avec ce module dès lors qu'ils supportent les protocoles cités précédemment.

Pour pouvoir écouter le flux audio depuis un autre ordinateur, il suffit d'avoir installé un lecteur multimédia qui supporte les protocoles RTSP et RTP/RTCP. Dans le mode de réalisation testé, l'écoute fonctionne avec des lecteurs tels que RealPlayer ou QuickTime. Le lecteur Windows Media (marques déposées) ne supportant pas encore RTP mais uniquement MMS (marque déposée) ne peut donc pas encore lire les flux audio dans cet exemple particulier de réalisation. Une variante du troisième aspect de la présente invention peut toutefois supporter MMS par une extension du programme stocké dans le microcontrôleur.

On observe, en figure 7, à la base de cette pile de couches protocolaires, l'interface PCMCIA, puis, en montant, le standard 802.11b/802.3, la couche MAC, la couche LLC/SNAP, les standards IP et ARP, les standards TCP, UDP et ICMP, puis les standards HTTP, RTSP et RTP/RTCP et, en couche la plus haute, les standards HTML, SDP et Codec PCMu-Law.

On observe que les standards http et HTML ne sont utilisés, dans ce mode de réalisation, pour savoir si un utilisateur distant écoute le flux audio et éventuellement, pour qu'un site de la toile puisse paramétrer dynamiquement la configuration du transmetteur objet du troisième aspect de la présente invention. Ces standards sont donc optionnels pour la mise en oeuvre du troisième aspect de la présente invention.

En ce qui concerne l'encodage du son, celui-ci est encodé au format PCM u-Law, ce qui est un format très répandu. II correspond au profil 0 dans la liste des profils audio vidéo. Le flux est échantillonné à une fréquence de 8 khz soit un échantillon tous les 125 micro-secondes.

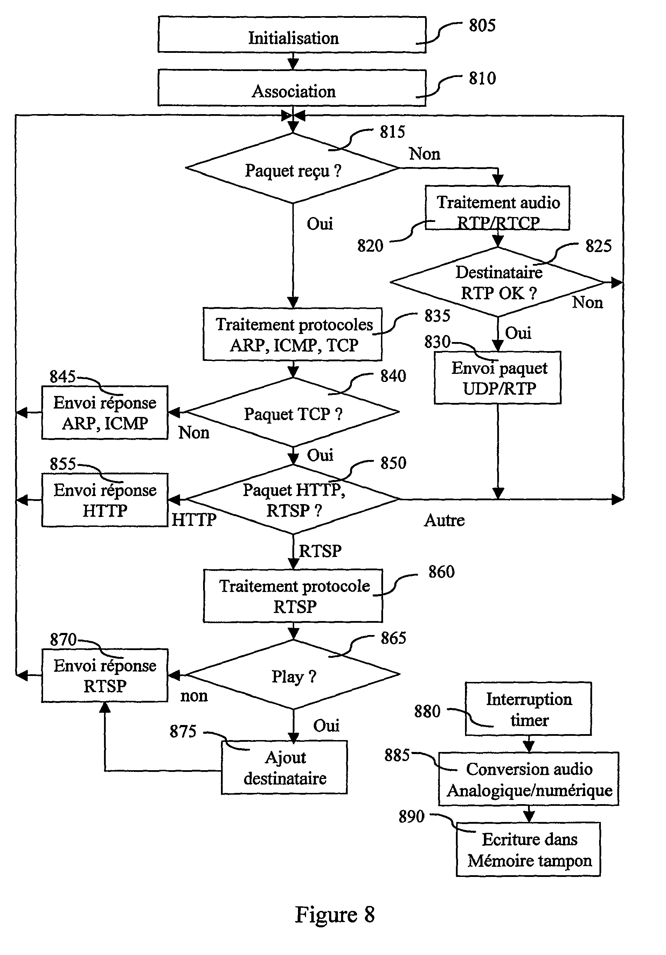

Le fonctionnement du module logiciel du microcontrôleur 620 est illustré en figure 8.

On observe, en figure 8, une étape d'initialisation du système 805 qui s'effectue à la mise sous tension. Au cours de cette étape 805, le microcontrôleur 620 lance la fonction principale "main", qui effectue les tâches suivantes :
- initialisation des ports d'entrées-sorties,
- initialisation du pilote (en anglais "driver") PCMCIA par un appel à la fonction "PCMCIA Init".

Cette fonction détecte la présence de la carte PCMCIA, effectue une initialisation logicielle ("Soft Reset") de cette carte, et la bascule en mode entrée/sortie ("Input/Output"),
- initialisation du pilote WIFI/PRISMII en mode "Station" par un appel à la fonction "PRISMII_Init_STA". Cette fonction initialise le logiciel propriétaire PRISMII, alloue les mémoires tampon ("buffers") de transmission, et initialise l'adresse MAC (acronyme de Machine Address Code, pour, en français Adresse codée de la machine) de la carte Wifi (dans l'exemple, l'adresse MAC a pour valeur 00 :34 :56 :78 :9A :BC).

Après l'initialisation du module émetteur audio 610, le microcontrôleur 620 l'associe au point d'accès Wifi 635, étape 810. Dans l'exemple illustré en figures 6 à 8, le module émetteur 610 cherche à s'associer au SSID (acronyme de Service Set Identifier, pour, en français Identifiant de Service Radio) cible « tsunami ».

Le module émetteur 610 effectue d'abord une recherche des SSID présents au moyen de la fonction "Scan". Une fois le SSID cible détecté, le module émetteur 610 lance la procédure d'association au moyen de la fonction "Join". Si l'opération d'association s'est bien déroulée, le module émetteur audio est en mesure de transmettre et de recevoir des paquets de données.

Après association, la fonction principale "main" rentre dans une boucle infinie qui scrute la mémoire tampon "buffer" de réception de la carte Wifi 630, étape 815, au moyen de la fonction "WaitRx". Cette fonction renvoie « true » si un paquet a été reçu, sinon « false ».

En ce qui concerne le traitement des protocoles ARP, ICMP et TCP, étape 835 qui est effectuée si un paquet a été reçu, le traitement de ce paquet est confié à la fonction "ProcessRx". Cette fonction extrait d'abord l'entête "LLC/SNAP" du paquet et vérifie qu'il s'agit bien d'un paquet IP ou ARP à destination du transmetteur audio. Si ce n'est pas le cas, le paquet est détruit.

En cas de réception d'un paquet IP (code LLCSNAP/PID 0x800), la fonction "ProcessRx" teste s'il s'agit d'un paquet TCP, étape 840.

Si le paquet IP est de type ICMP (acronyme de Internet Control Message Protocol, pour, en français Protocole de Messages de Contrôles Internet), la fonction "ProcessRx" envoie une réponse à l'expéditeur en appelant la fonction "SendICMPReply", étape 845. Si le paquet est de type ARP (code LLCSNAP/PID 0x806), la fonction "ProcessRx" envoie une réponse en appelant la fonction "SendARPReply", étape 845. Puis, on retourne à l'étape 815.

Si le paquet est de type TCP, la fonction "ProcessRx" teste d'abord s'il s'agit d'un paquet HTTP ou RTSP, étape 850. Si ce n'est pas le cas, le paquet est détruit, et on retourne à l'étape 815. Selon l'émetteur du paquet, le port source, et le port destination, la fonction ProcessRx détermine si une session TCP a déjà été ouverte et modifie les paramètres de session en conséquence, ou bien initialise une nouvelle session TCP.

Le paquet et le numéro de session TCP sont alors transmis à la fonction "ProcessTCPPacket". Cette fonction traite la machine à état TCP et gère donc les signaux de synchronisation TCP-SYN, d'accusé de réception TCP-ACK, et la fonction de fin de communication TCP-FIN.

Si le paquet est HTTP, au cours d'une étape 855, la fonction "ProcessTCPPacket" évalue la chaîne « GET » reçue par le transmetteur audio et répond en envoyant une réponse HTTP suivie d'une page Web écrite en HTML (la page Web d'un site contenu dans la mémoire du microcontrôleur affiche par exemple une information indiquant si un client à l'écoute du flux, ou stream, audio est connecté : cette connexion est le résultat d'une négociation entre les deux partenaires selon le protocole RTSP). Puis on retourne à l'étape 815.

Si le paquet est RTSP, pour le traitement du protocole RTSP, au cours d'une étape 860, la fonction "ProcessTCPPacket" évalue la chaîne de caractères reçue par le transmetteur audio et répond en envoyant une réponse RTSP adaptée à la requête RTSP. Les mots-clés supportés sont "OPTIONS", "DESCRIBE", "SETUP", "PLAY" et "TEARDOWN" (ces mots-clés sont décrits précisément dans la norme IETF RFC 2326 qui décrit le protocole RTSP).

Au cours d'une étape 865, on détermine si la chaîne RTSP reçue est le mot "PLAY". Sinon, au cours d'une étape 870, la fonction "ProcessTCPPacket" envoie la réponse RTSP adéquate et retourne à l'étape 815. En ce qui concerne cet envoi d'une réponse RTSP, lors de la requête "DESCRIBE", le transmetteur audio envoie une réponse respectant le protocole SDP, en renseignant notamment les champs « version », « media », « control ». Lors de la requête "SETUP", le transmetteur récupère l'adresse des ports clients RTP et RTCP, et envoie en retour ses propres ports RTP et RTCP (4096 et 4097 dans implémentation du prototype).

Si la chaîne RTSP reçue est le mot "PLAY", l'envoi de paquets audio peut débuter après mémorisation du destinataire, étape 875 et on retourne à l'étape 870. L'émetteur considère que l'envoi des paquets RTP/UDP audio vers le récepteur peut débuter. L'adresse IP et les ports RTP et RTCP du destinataire sont mémorisés. La fonction "ProcessTCPPacket" envoie la réponse RTSP, étape 870 et sort avec le code retour 0x11 pour indiquer le début de l'envoi des paquets audio. La fonction principale "main" active alors les interruptions timers avec une fréquence de 8000Hz soit une période de 125 micro-secondes.

Si le résultat de l'étape 815 est négatif, c'est-à-dire si aucun paquet n'a été reçu, au cours d'une étape 820, on effectue le traitement audio RTP/RTCP et la fonction principale "main" appelle ce traitement dans sa boucle infinie. Chaque fois que la mémoire tampon buffer tournant est remplie, le contenu de la mémoire tampon buffer tournant est transféré dans une mémoire tampon buffer de transmission RTP après avoir été converti avec le codeur-décodeur (ou codec) "PCM-ULaw".

Puis, au cours d'une étape 825, on teste la présence de destinataire audio RTP/RTCP: si un destinataire RTP/RTCP est identifié (code 0x11 renvoyé par la fonction "ProcessTCPPacket"), l'envoi du paquet peut démarrer, sinon on retourne à la boucle infinie, par l'étape 815.

Pendant l'envoi d'un paquet UDP/RTP, étape 830, le contenu de la mémoire tampon buffer de transmission est envoyé à la fonction "SndRTPPacket" dont le rôle est d'envoyer le paquet audio RTP vers le destinataire via la liaison Wifi. Le paquet RTP est complété avec les informations séquentielles et temporelles (par la fonction "TimeStamps") permettant au récepteur de savoir comment ordonnancer les paquets reçus. Puis on retourne à l'étape 815.

Lors d'une interruption de l'horloge "timer", étape 880, cette interruption étant activée par la fonction principale "main" lorsqu'un destinataire RTP/RTCP est identifié, le microcontrôleur 620 transfère la main à la routine d'interruption "clock isr" et revient au programme principal par l'étape 815 à l'issue de la routine d'interruption. Le microcontrôleur génère automatiquement l'interruption "TIMER0" dès que le compteur "TIMER0" s'annule. II est donc nécessaire de réinitialiser ce compteur dans la routine d'interruption afin qu'une nouvelle interruption puisse être générée.

En ce qui concerne la conversion analogique/numérique, étape 885, outre l'initialisation du compteur "TIMER0", la fonction "clock isr" récupère le résultat de la conversion analogique-numérique sur le port AN0. Cette conversion prend environ 20 microsecondes, ce qui reste compatible avec la fréquence d'échantillonnage de 8000 Hz qui nécessite une mesure toutes les 125 micro-secondes.

Puis, au cours d'une étape 890, on procède à l'écriture dans la mémoire tampon buffer tournant, une fois l'échantillonnage audio effectué, le résultat de la conversion étant inscrit dans la mémoire tampon buffer tournant. L'index de la mémoire tampon buffer est incrémenté pour préparer la prochaine écriture. La routine d'interruption peut alors rendre la main au programme principal.

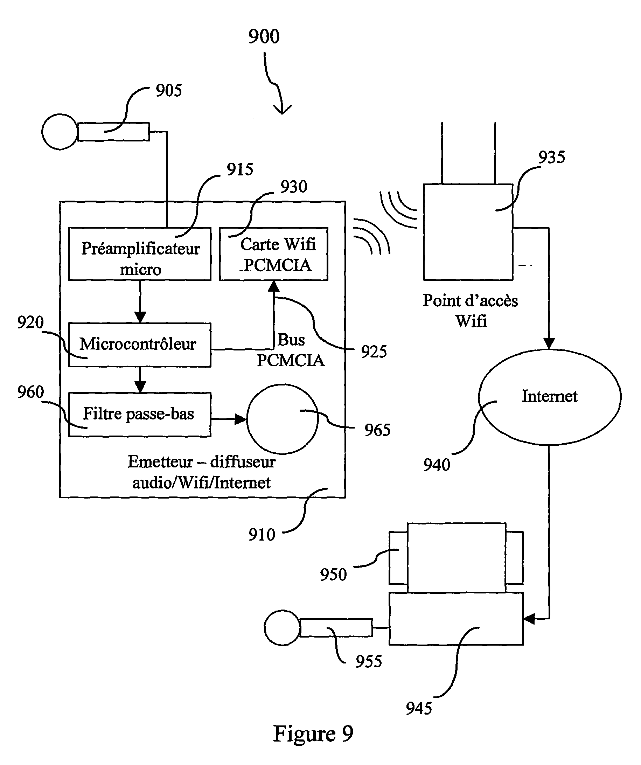

Dans le deuxième mode de réalisation illustré en figures 9 à 11B et adapté à la téléphonie sans fil Wifi sur Internet, le microcontrôleur est, par exemple, celui de référence PIC18F452, de la famille MICROCHIP PIC18F (marque déposée). II se charge de numériser le son ainsi que de piloter la carte Wifi depuis l'interface PCMCIA. Il restitue également le son vers des hauts parleurs grâce à son interface PWM (acronyme de Pulse Width Modulation pour modulation en largeur d'impulsion).

Le signal Wifi issu du transmetteur téléphonique est capté par une borne Wifi qui se charge de le relayer vers internet. Un ordinateur équipé d'un progiciel implémentant le standard H323 de type "NetMeeting" ou "openphone" (marques déposées) peut alors jouer le son reçu depuis Internet et y répondre de façon interactive.

Un des intérêts de ce mode de réalisation réside dans sa grande miniaturisation et dans son évolutivité tout en utilisant des composants usuels et des protocoles standardisés de transmission sans fil et de voix sur IP. En outre, l'intelligence du système est répartie entre le microcontrôleur qui gère les protocoles Internet, la numérisation/dénumérisation du son et la carte Wifi qui gère la transmission sans fil. Le fait d'utiliser un microcontrôleur de la famille Microchip PIC18F autorise une évolutivité accrue et aisée des fonctionnalités du transmetteur téléphonique, ainsi qu'un coût de fabrication limité. Par ailleurs, il n'existe pas de produits aussi simples qui sache implémenter les protocoles de la norme H323 dans un microcontrôleur polyvalent.

Cette compatibilité avec les standards Internet et multimédias permet de mettre en oeuvre le troisième aspect de la présente invention avec des progiciels implémentant la norme H323 largement répandus tels que "Netmeeting" et "Openphone" plutôt qu'avec des logiciels propriétaires, ce qui aurait été le cas si l'on avait pas utilisé des protocoles standardisés.

On observe, en figure 9, un transmetteur téléphonique 900 relié à un microphone 905 et qui comporte, dans un circuit électronique ou module émetteur-diffuseur audio/Wifi/Internet 910, un préamplificateur 915, un microcontrôleur 920, un bus PCMCIA 925, une carte Wifi PCMCIA 930, un étage filtre passe-bas 960 et un haut-parleur 965. Les signaux émis par la carte Wifi PCMCIA 930 sont reçus par un point d'accès Wifi 935 et transmis, par l'intermédiaire du réseau informatique Internet 940, à un ordinateur 945 comportant des haut-parleurs 950. Inversement, des sons captés au niveau de l'ordinateur 945 par un microphone 955 sont transmis, par l'intermédiaire de l'ordinateur 945 et d'Internet 940 au point d'accès Wifi 935, où ils sont transmis au module 910.

De manière caractéristique, le circuit électronique 910 comporte un unique circuit intégré consistant en le microcontrôleur 920.

En ce qui concerne l'étage haut-parleur, la sortie sonore s'effectue sur la broche PWM du microcontrôleur 920, la largeur de l'impulsion étant directement proportionnelle à la tension du signal à restituer. Le filtre passif passe-bas, par exemple à réseau RC, 960 convertit le signal issu de la broche de modulation en largeur d'impulsion PWM du microcontrôleur 920. Le filtre passe-bas 960 a, par exemple, une bande passante à -3dB de 8000 Hz. Le signal issu du filtre 960 est ensuite adapté en impédance par un montage émetteur-suiveur utilisant un transistor BC548 (non représenté).

Après cette adaptation d'impédance, le signal est susceptible d'attaquer un haut-parleur 965 ayant une impédance supérieure ou égale à 1 Kohms, ce qui est compatible avec les hauts-parleurs équipant les casques audio.

En ce qui concerne l'étage microcontrôleur, le microcontrôleur 920 est de type reprogrammable, par exemple de type PIC18F452 de Microchip, dispose d'une capacité de 32 koctets de mémoire morte ROM et d'une mémoire vive RAM dynamique de 1536 octets. Il dispose en outre de huit entrées analogiques et de trente quatre ports d'entrées-sorties. Dans le mode de réalisation testé, on n'utilise qu'un seul port analogique sur lequel est transmis le signal audio pré-amplifié.

Pour pouvoir répondre aux contraintes temps-réel liées à l'interactivité, le microcontrôleur 920 est, par exemple cadencé à une vitesse de 40Mhz, ce qui permet d'obtenir une puissance de 10Mips.

Le microcontrôleur 920 est relié à la carte Wifi 930 par l'intermédiaire d'une interface PCMCIA. Cette interface PCMCIA permet de connecter des cartes Wifi PCMCIA ou compact flash par l'intermédiaire d'un adaptateur. Le microcontrôleur 920 utilise huit lignes de données pour transmettre vers ou recevoir des données de la carte PCMCIA et onze lignes d'adresses. Il y a par ailleurs six lignes de contrôle qui permettent de piloter la carte ou de recevoir des informations de contrôle.

En ce qui concerne interface Wifi, on met en oeuvre le circuit imprimé chipset Wifi Prism Il d'Intersil.

En ce qui concerne l'étage alimentation, le prototype a été alimenté au moyen d'une pile 9 volts, dont l'essentiel de l'énergie est consommée par la carte Wifi. Tout autre type d'alimentation régulée de type 9 volts peut cependant convenir.

En ce qui concerne la-mise en oeuvre du troisième aspect de la présente invention, un transmetteur téléphonique a été testé avec succès en utilisant une carte Wifi Netgear MA401 (Marque déposée) et une carte Wifi Inventel Airline (Marques déposées) SN11P, chacune de ces cartes étant équipée du circuit imprimé Chipset Prism Il d'Intersil (Marques déposées).

La communication vers Internet s'effectue au travers d'un point d'accès Wifi. Dans le cas du prototype, ce point d'accès est une borne AP1200 de Cisco (Marque déposée) mais n'importe quel autre routeur Wifi 802.11 B peut être utilisé.

Les ordinateurs reliés au point d'accès en même temps que le téléphone Wifi à microcontrôleur Microchip (marque déposée) peut dialoguer avec ce module dès lors qu'ils supportent les protocoles H323 cités précédemment.

Pour pouvoir dialoguer en voix sur IP avec le téléphone Wifi depuis un autre ordinateur, il suffit d'utiliser un progiciel H323 tel que Netmeeting livré en standard sous Windows ou bien OpenPhone depuis un PC sous Linux (marque déposée). A l'heure actuelle la mise en oeuvre du troisième aspect de la présente invention a été testée avec succès en utilisant ces progiciels.

En ce qui concerne la pile de protocoles Internet, le module de transmission audio supporte les protocoles Internet suivants :
- ARP pour la résolution d'adresse,
- IP pour Internet,
- ICMP Internet message protocole,
- UDP,
- TCP,
- HTTP,
- H323 pour la pile de protocole de voix sur IP qui inclut:
   - Q931,
   - H225 avec encodage ASN.1 PER,
   - H245 avec encodage ASN.1 PER et
- RTP/RTCP.

Seule une implémentation réduite de ces protocoles est implémentée pour pouvoir fonctionner dans un espace mémoire très réduit.

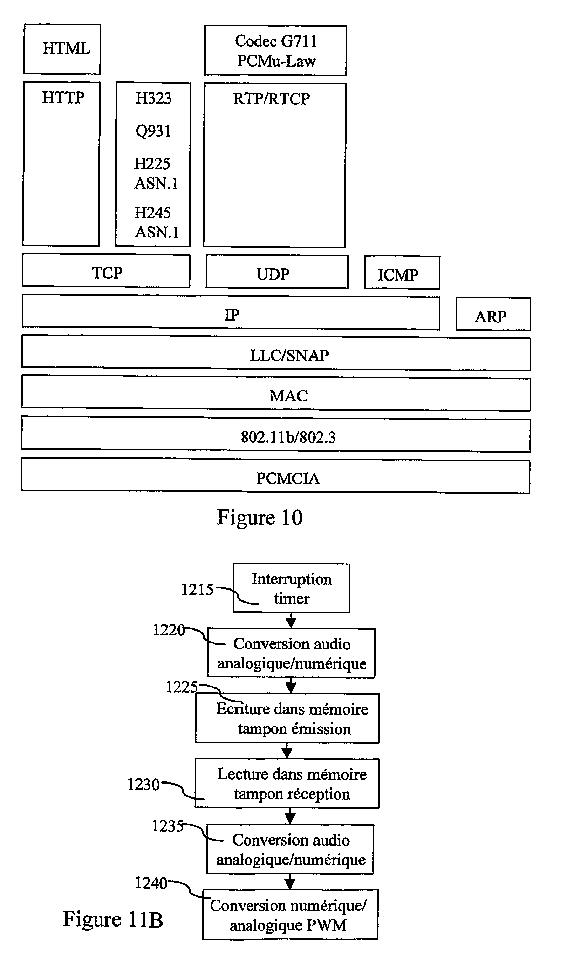

Cette pile de protocoles réduite et optimisée est décrite, par la manière dont se superposent les couches protocolaires, en figure 10.

On observe, en figure 10, à la base de cette pile de couches protocolaires, l'interface PCMCIA, puis, en montant, le standard 802.11b/802.3, la couche MAC, la couche LLC/SNAP, les standards IP et ARP, les standards TCP, UDP et ICMP, puis les standards HTTP, H323 (comportant les standards Q931, H225 et H245) et RTP/RTCP et, en couche la plus haute, les standards HTML et Codec PCMu-Law.

En ce qui concerne l'encodage et le décodage du son, le transmetteur téléphonique encode et décode le son au format PCMu-Law. II correspond au profil 0 dans la liste des profils audio vidéo. Le flux est échantillonné à une fréquence de 8 khz soit un échantillon tous les 125 micro-secondes. Des algorithmes spécifiques sont développés pour supporter le codec PCMu-Law en format d'échantillon codé sur 8 bits alors que la spécification initiale prévoit des échantillons de 16 bits. En effet, le microcontrôleur PIC18F452 à une limite technique de 10 bits pour la numérisation/dénumérisation qui, dans le mode de réalisation décrit, a nécessité une adaptation du codec.

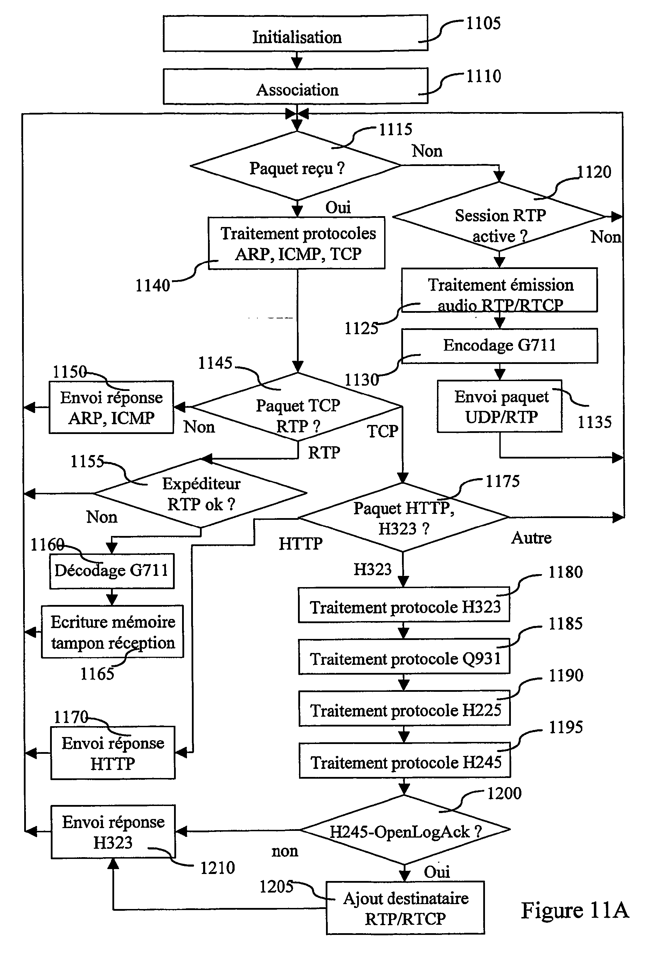

Le module logiciel microcontrôleur est décrit en regard des figures 11A et 11B.

L'initialisation du système s'effectue à la mise sous tension, étape 1105. Le microcontrôleur 920 lance la fonction principale "main", qui effectue les tâches suivantes :
- initialisation des ports d'entrées-sorties,
- pré-remplissage de l'entête du paquet RTP,
- initialisation du pilote PCMCIA par un appel à la fonction "PCMCIA Init". Cette fonction détecte la présence de la carte PCMCIA, effectue une remise à zéro logicielle ("Soft Reset") de cette carte, et la bascule en mode Input/Output,
- initialisation du pilote Wifi/PRISMII en mode "Station" par un appel à la fonction "PRISMII Init STA": cette fonction initialise le logiciel propriétaire ("firmware") PRISMII, alloue les mémoires tampons buffers de transmission, et initialise l'adresse MAC de la carte Wifi (dans notre exemple, l'adresse MAC a pour valeur 00 :34 :56 :78 :9A :BC).

Puis, au cours d'une étape 1110, le microcontrôleur procède à l'association du transmetteur téléphonique 900 au point d'accès Wifi 935. Dans notre exemple le système cherche à s'associer au SSID cible « tsunami ». Le transmetteur téléphonique Wifi effectue d'abord une recherche des SSID présents au moyen de la fonction "Scan". Une fois le SSID cible détecté, le microcontrôleur lance la procédure d'association au moyen de la fonction "Join". Si l'opération d'association s'est bien déroulée, le transmetteur téléphonique Wifi est en mesure de transmettre et de recevoir des paquets par l'intermédiaire du point d'accès Wifi 935.

Au cours d'une étape 1115, on effectue un test de réception de paquet, la fonction principale "main" rentrant dans une boucle infinie qui scrute d'abord la mémoire tampon buffer de réception de la carte Wifi au moyen de la fonction "WaitRx". Cette fonction renvoie la valeur « true » si un paquet a été reçu, sinon elle renvoie la valeur « false ».

Si un paquet a été reçu, au cours d'une étape 1140, on effectue le traitement des protocoles ARP, ICMP, TCP et UDP, le traitement du paquet étant confié à la fonction "ProcessRx". Cette fonction extrait d'abord l'entête LLC/SNAP du paquet et vérifie qu'il s'agit bien d'un paquet IP ou ARP à destination du téléphone Wifi. Si ce n'est pas le cas, le paquet est détruit.

Puis, au cours d'une étape 1145, on effectue un test pour déterminer le type de paquet reçu. Si le paquet est de type TCP, au cours d'une étape 1175, la fonction "ProcessRx" teste s'il s'agit d'un paquet HTTP ou H323 (ce qui inclut aussi les paquets H245 qui font partie de la pile de protocoles H323). Si ce n'est pas le cas, le paquet est détruit. Selon l'émetteur du paquet, le port source, et le port destination, la fonction détermine si une session TCP a déjà été ouverte et modifie les paramètres de session en conséquence, ou bien initialise une nouvelle session TCP. Le paquet et le numéro de session TCP sont alors transmis à la fonction "ProcessTCPPacket". Cette fonction traite la machine à état TCP et gère donc les signaux de synchronisation "TCP-SYN", d'accusé de réception "TCP-ACK", et de fin de communication "TCP-FIN".

Si le paquet est conforme au standard H323, pour le traitement du protocole H323, la fonction "ProcessTCPPacket" évalue le port du protocole TCP, étape 1180. S'il s'agit du port H323 (1720), la fonction effectue alors le traitement des protocoles Q931, étape 1185 et H225, étape 1190. Si il s'agit du port H245, la fonction "Opère" effectue alors le traitement du protocole H245, étape 1195.

En ce qui concerne le traitement selon le protocole Q931, étape 1185, la fonction "ProcessTCPPacket" récupère d'abord le numéro de référence de l'appel Q931 et vérifie qu'il s'agit bien d'un paquet « SETUP ». si c'est le cas, la fonction ProcessTCPPacket renvoie un paquet Q931 « CONNECT » correspondant au numéro de référence de l'appel téléphonique et ajoute l'information « Display » avec pour valeur « INCS ». Ensuite les informations correspondant au protocole H225 sont ajoutées au paquet Q931 dans le champ « User-User ».

En ce qui concerne le traitement protocole H225, étape 1190, la fonction "ProcessTCPPacket" ajoute les informations H225 au paquet Q931 sous le format ASN.1 avec encodage PER. Le champ « H323 message body » a pour valeur « connect ». Le champ « H245Address » a pour adresse IP, l'adresse du téléphone Wifi, et le port de communication H245 est renseigné. Le champ « ConferencelD » est également renseigné. Par ailleurs, le champ « H245 Tunneling » a pour valeur « false », ce qui signifie que les paquets H245 ne seront pas encapsulés dans les paquets H225. Le paquet H225 encapsulé dans le paquet Q931 est ensuite envoyé à l'appelant.

En ce qui concerne le traitement selon le protocole H245, étape 1195, dans un premier temps, la fonction "ProcessTCPPacket" construit un tableau où sont stockés les paramètres des messages requêtes ou réponses envoyés par l'appelant au fur et à mesure que les paquets H245 fragmentés arrivent sur le port H245. Cette opération nécessite un décodage des paquets codés en ASN.1 PER.

Une fois que l'appelant a terminé son envoi de fragments de paquet, le traitement et l'analyse des messages et réponses H245 peut commencer.

Dans le cas d'une requête de type « MasterSIaveDetermination », une réponse de type « MasterSlaveDeterminationAck » avec décision « master » est renvoyée à l'appelant.

Dans le cas d'une requête de type « TerminalCapabilitySet », une réponse de type « TerminalCapabifitySetAck » avec un numéro de séquence identique à celui de la requête est renvoyée. Une requête de type « TerminalCapabilitySet » est ajoutée à la réponse renvoyée à l'appelant. Cette requête précise que le téléphone Wifi supporte le Codec G711 Ulaw, avec des paquets RTP allant jusqu'à 256 octets.

Dans le cas d'une requête de type « OpenLogicalChannel », une réponse de type « OpenLogicalChannelAck » est renvoyée avec un « LogicalChannelNumber » identique à la requête. Les champs « MediaChannel » et « MediaControlChannel » sont renseignés avec l'adresse IP et les ports RTP/RTCP du téléphone Wifi.

Dans le cas d'une réponse de type « MasterSlaveDeterminationAck », le transmetteur téléphonique Wifi renvoie à l'appelant une requête de type « OpenLogicalChannel ». Le champ « MediaControlChannel » de la requête est renseigné avec le port RTCP et l'adresse IP du téléphone Wifi.

Dans le cas d'une commande de type « EndSessionCommand », ce message de commande indique au téléphone Wifi que la session H323 doit s'achever. La fonction "ProcessTCPPacket" renvoie alors un code retour 0x12 indiquant l'achèvement de la session H323 et donc l'arrêt des flux audio.

Puis, au cours d'une étape 1200, on teste si la réponse est de type « OpenLogicalChannelAck » (correspondant à "OpenLogAck" dans la figure), dans la fonction "ProcessTCPPacket", ce message H245 indiquant que la négociation H323 est maintenant achevée. L'envoi et la réception des flux audio peuvent alors débuter et on passe à l'étape 1205. Sinon, on passe à l'étape 1210.

Pour l'ajout du destinataire RTP/RTCP, étape 1205, si le message H323 reçu est « OpenLogicalChannelAck », le transmetteur téléphonique Wifi considère que l'envoi et la réception des paquets RTP/UDP audio peuvent débuter. L'adresse IP et les ports RTP et RTCP du destinataire sont mémorisés. La fonction "ProcessTCPPacket" sort avec le code retour 0x11 pour indiquer le début de l'envoi et de la réception des paquets audio. La fonction principale "main" active alors les interruptions d'horloge (« timer ») avec une fréquence de 8000Hz soit une période de 125 micro-secondes et rentre dans la boucle de traitement commune aux flux audio et aux paquets IP. Puis on passe à l'étape 1210.

Au cours de l'étape 1210, qui concerne l'envoi d'une réponse H323, lors de la négociation H323, chacun des messages H323 ou H245 reçus par le téléphone Wifi fait l'objet d'une réponse respectant la norme H323 encodée au format ASN.1 PER. Puis on retourne à l'étape 1115.

Si l'étape 1145 détermine que le paquet est de type RTP, au cours d'une étape 1155, on teste le paquet RTP : la fonction "ProcessRx" teste s'il s'agit d'un paquet UDP, et ensuite elle vérifie que le port destination correspond bien au port RTP du téléphone Wifi. Si le paquet RTP reçu a bien, pour port source, le port RTP de l'expéditeur RTP/RTCP issu de la négociation H323, le traitement du paquet audio reçu peut commencer. Sinon, on retourne à l'étape 1115. Si il s'agit du premier paquet audio, le programme calcule alors la taille des informations audio contenues dans le paquet, afin de dimensionner correctement la mémoire tampon buffer tournant de réception audio.

Puis, au cours d'une étape 1160, le flux audio reçu est encodé selon le codec G711 Mu-Law. Un décodage brut donnerait une série d'échantillons codés sur 16 bits, ce qui est incompatible avec la résolution du module PWM du microcontrôleur Microchip PIC18F452 limitée à 10 bits. Un algorithme spécifique de décodage G711 Mu-Law « ulaw2linear8 » a donc été développé pour restituer les échantillons sonores au format 8 bits.

Puis, au cours d'une étape 1165, étape d'écriture dans la mémoire tampon buffer tournant de réception, la mémoire tampon buffer tournant de réception est dimensionnée à deux fois la taille des paquets audio reçus. Ce doublement de la taille permet de compenser les décalages temporels dans la réception, ce qui assure un bon confort acoustique. Après décodage G711 Mu-Law, les échantillons 8 bits sont inscrits dans la mémoire tampon buffer de réception. La position d'écriture dans la mémoire tampon buffer est alternativement dans la première moitié ou la seconde moitié de la mémoire tampon buffer au fur et à mesure des paquets reçus. Ce mode alternatif permet d'éviter que l'on inscrive des échantillons dans la partie de la mémoire tampon buffer en cours de lecture par la routine d'interruption.

Si l'étape 1175 détermine que le paquet est de type HTTP, au cours d'une étape 1170, étape d'envoi d'une réponse HTTP, la fonction "ProcessTCPPacket" évalue la chaîne « GET » reçue par le transmetteur audio et répond en envoyant une réponse HTTP suivie d'une page Web écrite en HTML.

Si l'étape 1145 détermine que le paquet n'est ni RTP, ni TCP, au cours d'une étape 1150, étape d'envoi d'une réponse ARP, ICMP, si le paquet IP est de type ICMP, la fonction "ProcessRx" envoie une réponse à l'expéditeur en appelant la fonction "SendICMPReply". Si le paquet est de type ARP (code LLCSNAP/PID 0x806), la fonction "ProcessRx" envoie une réponse en appelant la fonction "SendARPReply". Puis, on retourne à l'étape 1115.

Si l'étape 1115 détermine qu'aucun paquet n'a été reçu, au cours d'une étape 1120, on détermine si une session RTP est active. Si aucune session RTP n'est active, la fonction principale "main" reboucle à l'étape 1115, en attente de réception d'un paquet.

Si une session RTP est active, on effectue, au cours d'une étape 1125, un traitement d'émission audio RTP/RTCP, la fonction principale "main" appelant ce traitement dans sa boucle infinie. Pour des raisons de performance, ce traitement s'opère en trois temps selon la position de l'index dans la mémoire tampon buffer tournant d'émission. Si l'index est nul, le paquet RTP d'émission est initialisé en appelant la fonction "PrepareToSendRTPPacket". Cette fonction paramètre les informations séquentielles et temporelles ("TimeStamps") permettant au récepteur de savoir comment ordonnancer les paquets reçus. Ensuite, au fur et à mesure de leur arrivée, les échantillons sonores sont convertis au format G711 Mu-Law en appelant la fonction "linear2ulaw8" et inscrits dans le paquet RTP d'émission. Puis, une fois que l'index d'émission atteint la taille du paquet RTP, le paquet RTP est envoyé vers le destinataire issu de la négociation H323.

Puis, au cours d'une étape 1130, on procède à l'encodage G711 au cours duquel les échantillons sonores sont encodés selon le codec G711 Mu-Law. Dans le mode de réalisation décrit, un encodage brut serait inapproprié car il se baserait sur des échantillons de 16 bits alors que le convertisseur analogique/numérique inclus dans le microcontrôleur Microchip PIC18F452 a une résolution limitée à 10 bits. Un algorithme spécifique d'encodage G711 Mu-Law "linear2ulaw8" a donc été développé pour encoder les échantillons sonores 8 bits au format G711 MULaw.

Puis, au cours d'une étape 1135, on envoie un paquet UDP/RTP, une fois la mémoire tampon buffer de transmission complétée, le paquet RTP étant alors envoyé au destinataire. Le numéro de séquence est incrémenté et l'index d'émission est réinitialisé. Puis, on retourne à l'étape 1115.

La figure 11B concerne les étapes effectuées en cas d'interruption d'horloge ("timer"), étape 1215. Cette interruption est activée par la fonction principale "main" lorsqu'une session H323 a abouti et qu'un destinataire RTP/RTCP est donc identifié. Le microcontrôleur transfère alors la main à la routine d'interruption "clock_isr" et revient au programme principal à l'issue de la routine d'interruption. Le microcontrôleur génère automatiquement l'interruption "TIMER0" dès que le compteur "TIMER0" s'annule. II est donc nécessaire de réinitialiser ce compteur dans la routine d'interruption afin qu'une nouvelle interruption puisse être générée.

Au cours d'une étape 1220, on effectue la conversion analogique/numérique : outre l'initialisation du compteur "TIMER0", la fonction "clock isr" récupère le résultat de la conversion analogique-numérique sur le port AN0. Cette conversion prend environ 20 microsecondes, ce qui est compatible avec la fréquence d'échantillonnage de 8000 Hz qui nécessite une mesure toutes les 125 micro-secondes.

Puis, au cours d'une étape 1225, on procède à l'écriture dans la mémoire tampon buffer tournant d'émission, une fois l'échantillonnage audio effectué, le résultat de la conversion étant inscrit dans la mémoire tampon buffer tournant d'émission et l'index du buffer d'émission étant incrémenté pour préparer la prochaine écriture.

Au cours d'une étape 1230 de lecture dans la mémoire tampon buffer tournant de réception, la routine d'interruption lit, mémorise, et efface l'emplacement de la mémoire tampon buffer de réception situé à l'index de lecture.

Puis, au cours d'une étape 1235 de conversion numérique/analogique PWM, la valeur lue dans la mémoire tampon buffer de réception est paramétrée dans l'interface "PulseWidthModulation" du microcontrôleur PIC18F452. Ainsi, une impulsion proportionnelle à la valeur paramétrée est générée, ce qui permet, après filtrage, une restitution sonore dont l'amplitude est proportionnelle à la valeur numérique mémorisée. Ensuite, l'index de lecture dans la mémoire tampon buffer tournant de réception est incrémenté et la routine d'interruption rend alors la main au programme principal.

En variante, le programme permet d'appeler un correspondant et d'entrer en communication avec lui.

## Revendications

1. Système de surveillance à distance comportant :
- au moins deux éléments (345, 347, 505, 509, 513) dits « têtes de réseau externe » comportant, chacun, au moins :
. un moyen (506, 510, 514) de communication à longue distance,
. un moyen (507, 511, 515) de communication sans fil à courte portée et
. un microcontrôleur (508, 512, 516) et
- au moins un capteur (517 à 540) adapté à émettre, avec un moyen (515, 523) de communication sans fil à courte portée, un signal représentatif d'une grandeur physique et lesdits éléments « têtes de réseau externe » étant adaptés à communiquer entre eux et avec ledit capteur, par l'intermédiaire de leurs moyens de communication sans fil à courte portée,
**caractérisé en ce que :**
- un élément « tête de réseau externe », dit élément « leader », est adapté à communiquer à longue distance, par l'intermédiaire de son moyen de communication à longue distance, en fonction du signal fourni par au moins un capteur,
- chaque élément « tête de réseau externe » autre que l'élément leader est adapté à fonctionner en mode dit « infrastructure », dans lequel tous les éléments autres que l'élément leader communiquent uniquement avec l'élément leader,
- au moins un élément « tête de réseau externe », différent de l'élément leader, est adapté :
- à détecter la défaillance de l'élément leader par l'absence de communication avec ledit élément leader et
- en cas de défaillance de l'élément leader à assurer une communication à longue distance par l'intermédiaire de son moyen de communication à longue distance,
- les éléments « têtes de réseau externe » et les capteurs sont adaptés, en cas de défaillance de l'élément leader, à passer en mode dit « adhoc », dans lequel ils communiquent tous entre eux, par l'intermédiaire de leurs moyens de communication à courte portée.

2. Système de surveillance selon la revendication 1, **caractérisé en ce que** le moyen de communication à courte portée de l'élément « tête de réseau externe » (345, 347, 505, 509, 513) leader est adapté à envoyer périodiquement des requêtes de supervision SNMP, acronyme de « Simple Network Management Protocol » pour protocole de gestion de réseau simple, vers chacun des éléments pour obtenir des informations sur leur état de fonctionnement.

3. Système de surveillance selon l'une quelconque des revendications 1 ou 2, **caractérisé en ce qu'**au moins un des dits éléments (345, 347, 505, 509, 513) « têtes de réseau externe » comporte un micro-contrôleur incluant son propre dispositif d'alimentation.

4. Système de surveillance selon l'une quelconque des revendications 1 à 3, **caractérisé en ce que** les éléments (345, 347, 505, 509, 513) « têtes de réseau externe » du système de surveillance sont répartis en ensembles (305, 325) et, dans chaque ensemble, ils sont adaptés à communiquer avec tous les autres éléments dudit ensemble.

5. Système de surveillance selon la revendication 4, **caractérisé en ce que** dans chaque ensemble (305, 325) d'éléments, chaque élément (345, 347, 505, 509, 513) « tête de réseau externe » est adapté à devenir élément leader dudit ensemble d'éléments, c'est-à-dire à organiser les communications avec tous les autres éléments dudit ensemble d'éléments.

6. Système de surveillance selon l'une quelconque des revendications 1 à 5, **caractérisé en ce que** au moins deux éléments (345, 347, 505, 509, 513) « têtes de réseau externe » sont adaptés à mettre en oeuvre des supports de communication à longue distance différents.

7. Système de surveillance selon l'une quelconque des revendications 1 à 6, **caractérisé en ce que** au moins un des éléments (345, 347, 505, 509, 513) « tête de réseau externe » est adapté à chiffrer des messages.

8. Système de surveillance selon l'une quelconque des revendications 1 à 7, **caractérisé en ce que** au moins un élément (345, 347, 505, 509, 513) « tête de réseau externe » est adapté à être interrogé à longue distance et, lorsqu'il est interrogé à longue distance, à émettre une requête à destination de chacun des autres éléments « têtes de réseau externe » du système pour recevoir, en retour, l'état et/ou des informations captées par des capteurs associés à desdits autres éléments « têtes de réseau externe ».

9. Système de surveillance selon l'une quelconque des revendications 1 à 8, **caractérisè en ce que** chaque capteur (517 à 522) est associé à un moyen (515, 523) de communication sans fil à courte portée.

10. Système de surveillance selon l'une quelconque des revendications 1 à 9, **caractérisé en ce qu'**au moins un élément (345, 347, 505, 509, 513) « tête de réseau externe » est adapté à transmettre à distance un signal d'alarme, en fonction d'un signal issu d'un capteur (517 à 540).

11. Système de surveillance selon l'une quelconque des revendications 1 à 10, **caractérisé en ce que** au moins un élément (345, 347, 505, 509, 513) « tête de réseau externe » est adapté à transmettre à distance un signal provenant d'un capteur (517 à 540).

12. Système de surveillance selon l'une quelconque des revendications 1 à 11, **caractérisé en ce que** au moins un capteur (517) est un capteur d'image.

13. Système de surveillance selon l'une quelconque des revendications 1 à 12, **caractérisé en ce que** au moins un capteur (518, 520) est un capteur d'ondes sonores.

14. Système de surveillance selon la revendication 13, **caractérisé en ce que** au moins un capteur d'onde sonore (518, 520) est associé à un contrôleur adapté à effectuer une reconnaissance de la parole.

15. Système de surveillance selon l'une quelconque des revendications 1 à 14, **caractérisé en ce qu'**au moins un capteur (535) comporte un bouton poussoir (540).

16. Système de surveillance selon rune quelconque des revendications 1 à 15, **caractérisé en ce que** au moins un des éléments (345, 347, 505, 509, 513) « tête de réseau externe » est une borne ADSL et/ou Wifi assurant la connectivité à distance sur le réseau Internet.

17. Système de surveillance selon l'une quelconque des revendications 1 à 16, **caractérisé en ce que** au moins un des éléments (345) « têtes de réseau externe » comporte une interface avec un réseau téléphonique et est adapté à composer un numéro de téléphone.

18. Système de surveillance selon l'une quelconque des revendications 1 à 17, **caractérisé en ce que** au moins un capteur (525, 530) est un détecteur périmétrique et/ou volumétrique.

19. Procédé de surveillance à distance comportant:
- une étape de capture et de traitement d'une grandeur physique,
- une étape de communication sans fil à courte portée entre deux éléments (345, 347, 505, 509, 513) dit « têtes de réseau externe» adaptés à communiquer à courte portée et à longue distance et
- une étape de communication à courte portée entre au moins un capteur et un élément « tête de réseau externe »
**caractérisé en ce qu'**il comporte
- une première étape de communication au cours de laquelle
- un élément « tête de réseau externe », dit élément « leader », communique à longue distance, par l'intermédiaire de son moyen de communication à longue distance, en fonction du signal fourni par au moins un capteur et
- chaque élément « tête de réseau externe » autre que l'élément leader fonctionne en mode dit « infrastructure », dans lequel tous les éléments autres que l'élément leader communiquent uniquement avec l'élément leader ; et
- une deuxième étape de communication au cours de laquelle:
- un élément « tête de réseau externe », différent de l'élément leader, détecte la défaillance de l'élément leader par l'absence de communication avec ledit élément leader et en cas de défaillance de l'élément leader, assure une communication à longue distance par l'intermédiaire de son moyen de communication à longue distance et
- en cas de défaillance de l'élément leader, les éléments « têtes de réseau externe » et les capteurs passent en mode dit « adhoc », dans lequel ils communiquent tous entre eux, par l'intermédiaire de leurs moyens de communication à courte portée.

## Claims

1. Remote surveillance system comprising:
- at least two elements (345, 347, 505, 509, 513) named "external network heads" comprising, each one, at least:
. a means (506, 510, 514) of communication at long distance,
. a means (507, 511, 515) of wireless communicating at short range and
. a microcontroller (508, 512, 516) and
- at least one sensor (517 to 540) adapted to emit, with a means (512, 523) of wireless communicating at short range, a signal representative of a physical data and the aforementioned elements "external network heads" being adapted to communicate between them and with the aforementioned sensor, via their means of wireless communicating at short range,
**characterized in that :**
- one element "external network head", named "leader" element, Is adapted to communicate at long distance, via its means of communication at long distance, according to the signal provided by at least one sensor,
- each element "external network head" other than the "leader" element, is adapted to work In mode named "infrastructure", in which all elements other than the "leader' element communicate only with the leader element,
- at least one element "external network head", different from the leader element, is adapted to :
- detect the failure of the leader element by the lack of communication with the aforesaid leader element and,
- in case of failure of the leader element, to carry out a communication at long distance via its means of communication at long distance,
- the elements "external network heads" and the sensors are adapted, in case of failure of the "leader" element, to switch to the mode named "adhoc", in which they all communicate between them via their means of communication at short range.

2. Surveillance system according to claim 1, **characterized in that** the means of wireless communication at short range of the element "external network head" (345, 347, 505, 509, 513) leader is adapted to sent periodically SNMP supervision requests (acronym of Simple Network Management Protocol ) to each of the elements in order to obtain information about their processing status.

3. Surveillance system according to any of claims 1 or 2, **characterized in that** at least one of the elements "external network heads" (345, 347, 505, 509, 513) comprises a microcontroller including its own power adapter.

4. Surveillance system according to any of claims 1 to 3, **characterized in that** the elements "external network heads" (345, 347, 505, 509, 513) of the surveillance system are grouped into separated sets (305, 325) and, in each set, they are adapted to communicate with all the other elements of the aforesaid set.

5. Surveillance system according to claim 4, **characterized in that** in each set (305, 325) of elements, each element "external network head" (345, 347, 505, 509, 513) is adapted to become the leader of the aforesaid set of elements, i.e. to organize the communication with all the other elements of the aforesaid set of elements.

6. Surveillance system according any of the claims 1 to 5, **characterized in that** at least two elements "external network heads" (345, 347, 505, 509, 513) are adapted to implement different supports for long-distance calls.

7. Surveillance system according to any of claims 1 to 6, **characterized in that** at least one of the elements "external network heads" (345, 347, 505, 509, 513) is adapted to cipher messages.

8. Surveillance system according to any of claims 1 to 7, **characterized in that** at least one element "external network head" (345, 347, 505, 509, 513) is adapted to being accessed at long distance and, when it is accessed at long distance, to transmit a request to each other element "external network head" of the system, in order to receive, as a response, the state and/or the information collected by the aforesaid sensors associated to the aforementionned other elements "eternal network heads".

9. Surveillance system according to any of claims 1 to 8, **characterized in that** each sensor (517 to 522) is associated to a means (515, 523) of wireless communicating at short range.

10. Surveillance system according to any of claims 1 to 9, **characterized in that** at least one element "external network head" (345, 347, 505, 509, 513) is adapted to transmit remotely an alarm, according to a signal resulting from a sensor (517 to 540).

11. Surveillance system according to any of claims 1 to 10, **characterized in that** at least one element "external network head" (345, 347, 505, 509, 513) is adapted to transmit remotely a signal coming from a sensor (517 to 540).

12. Surveillance system according to any of claims 1 to 11, **characterized in that** at least one sensor (517) is a sensor of image.

13. Surveillance system according to any of claims 1 to 12, **characterized in that** at least one sensor (518, 520) is a sensor of sound waves.

14. Surveillance system according to claim 13, **characterized in that** at least one sensor of sound wave (518, 520) is associated to a controller adapted to carry out a voice recognition.

15. Surveillance system according to any of claims 1 to 14, **characterized in that** at least one sensor (535) comprises a pushbutton (540).

16. Surveillance system according to any of claims 1 to 16, **characterized in that** at least one of the elements "external network heads" (345, 347, 505, 509, 513) is an ADSL and/or Wifi access point ensuring remote connectivity on the Internet network.

17. Surveillance system according to any of claims 1 to 16, **characterized in that** at least one of the elements "external network heads" (345) comprises an interface with a telephone network and is adapted to dial a telephone number.

18. Surveillance system according to any of claims 1 to 17, **characterized in that** at least one sensor (525, 530) is a perimetric and/or volumetric detector.

19. System of remote surveillance comprising :
- a stage of capture and treatment of a physical data,
- a stage of wireless communicating at short range between two elements named "external network heads" (345, 347, 505, 509, 513) adapted to communicate at short range and at long distance and
- a stage of communicating at short range between at least one sensor and one element "external network head"
**characterized in that** it comprises
- a first stage of communicating during which :
- an element "external network head" named element "leader" communicates at long distance, via its means of communicating at long distance according to the signal provided by at least one sensor and
- each element "external network head" other than the "leader" element works in mode named "infrastructure", in which all elements other than the "leader" element communicate only with the leader element; and
- a second stage of communication during which :
- an element "external network head" other than the "leader" element detects the failure of the leader element by the lack of communication with the aforesaid leader element and, in case of failure of the leader element, carries out a communication at long distance via its means of communication at long distance, and
- in case of failure of the leader element, the elements "external network heads" and the sensors switch to the mode named "adhoc", in which they all communicate between them via their means of communication at short range.

## Patentansprüche

1. System der Fernüberwachung, das umfasst:
- wenigstens zwei Elemente (345, 347, 505, 509, 513) so genannte "Köpfe externen Netzwerkes", die, jedes, wenigstens umfassen :
. ein Mittel (506, 510,514) für Fernkommunikation,
. ein Mittel (507, 511, 515) zur drahtlosen Nahkommunikation und
. einen Mikrocontroller (508, 512, 516) und
- wenigstens einen Sensor (517 bis 540) mit einem Mittel (515, 523) zur drahtlosen Nahkommunikation, der fähig ist, ein repräsentatives Signal von einer physischen Größe hervorzubringen, und genannte Elemente "Köpfe externen Netzwerkes", die fähig sind, durch ihre Mittel zur drahtlosen Nahkommunikation untereinander und mit genanntem Sensor zu kommunizieren,
**dadurch gekennzeichnet ist, dass**:
- ein Element "Kopf externen Netzwerkes" so genanntes Element "leader", fähig ist, durch sein Fernkommunikationsmittel zu kommunizieren, gemäß dem Signal, das durch wenigstens einen Sensor geliefert wurde,
- jedes Element "Kopf externen Netzwerkes" mit Ausnahme des Elements "leader" fähig ist, in der so genannten Methode "Infrastruktur" zu funktionieren, in der alle anderen Elemente als das Element Leader nur mit diesem Element kommunizieren,
- wenigstens ein Element "Kopf externen Netzwerkes" mit Ausnahme des Leaderelements, fähig ist:
- das Versagen des Leaderelements durch das Fehlen der Kommunikation mit genanntem Leaderelement festzustellen und
- bei Versagen des Leaderelements, eine Fernkommunikation durch sein Fernkommunikationsmittel zu sichern,
- die Elemente "Köpfe externen Netzwerkes " und die Sensoren fähig sind, bei Versagen des Leaderelements, in die so genannte "adhoc" Methode überzugehen, in dem sie alle untereinander durch ihre Nahkommunikationsmittel kommunizieren.

2. Überwachungssystem nach Anspruch 1, wobei das Mittel zur Nahkommunlkation des Elements "Kopf externen Netzwerkes" (345, 347, 505, 509, 513) Leader fähig ist, regelmäßig Überwachungsbefehle SNMP 'Akronym von "Simple Network Management Protocol" für einfaches Netzwerkverwaltungsprotokoll' nach jedem Element zu senden, um Informationen über ihren Zustand des Funktionierens zu erhalten.

3. Überwachungssystem nach Anspruch 1 oder 2, wobei wenigstens eines der genannten Elemente (345, 347, 505, 509, 513) "Köpfe externen Netzwerkes' einen Mikrocontroller umfasst, der seine eigene Energieversorgungsanlage einschließt.

4. Überwachungssystem nach einem der Ansprüche 1 bis 3, wobei die Elemente (345, 347, 505, 509, 513) "Köpfe externen Netzwerkes" des Überwachungssystems in Gruppen (305, 325) verteilt sind, und innerhalb jeder Gruppe fähig sind, mit allen anderen Elementen der genannten Gruppe zu kommunizieren.

5. Überwachungssystem nach Anspruch 4, wobei in jeder Elementengruppe (305, 325), jedes Element (345, 347, 505, 509, 513) " Kopf externen Netzwerkes "fähig ist, Leaderelement der genannten Gruppe zu werden, das heißt, die Kommunikationen mit allen anderen Elementen der genannten Elementengruppe zu organisieren.

6. Überwachungssystem nach einem der Ansprüche 1 bis 5, wobei wenigstens zwei Elemente (345, 347,505, 509, 513) "Köpfe externen Netzwerkes" fähig sind, andere Mittel für die Fernkommunikation zu verwirklichen.

7. Überwachungssystem nach einem der Ansprüche 1 bis 6, wobei wenigstens eines der Elemente (345, 347, 505, 509, 513) "Kopf externen Netzwerkes" fähig ist, Daten zu beziffern.

8. Überwachungssystem nach einem der Ansprüche 1 bis 7, wobei wenigstens ein Element (345, 347, 505, 509, 513) "Kopf externen Netzwerkes" fähig ist, fern befragt zu werden und, wenn es fern befragt wird, einen Befehl nach jedem der anderen Elemente "Köpfe externen Netzwerkes" des Systems zu senden, um als Antwort den Zustand und/oder Daten zu erhalten, die durch Sensoren gemessen wurden, die mit den anderen Elementen "Köpfe externen Netzwerkes" verbunden sind.

9. Überwachungssystem nach einem der Ansprüche 1 bis 8, wobei jeder Sensor (517 bis 522), mit einem Mittel (515, 523) zur drahtlosen Nahkommunikation verbunden ist.

10. Überwachungssystem nach einem der Ansprüche 1 bis 9, wobei wenigstens ein Element (345, 347, 505, 509, 513) "Kopf externen Netzwerkes" fähig ist, ein Alarmsignal fernzuübermitteln, gemäß einem Signal, das durch einen Sensor (517 bis 540) geliefert wurde.

11. Überwachungssystem nach einem der Ansprüche 1 bis 10, wobei wenigstens ein Element (345, 347, 505, 509, 513) "Kopf externen Netzwerkes" fähig ist, ein Signal, das vom Sensor (517 bis 540) kommt, fernzuübermitteln.

12. Überwachungssystem nach einem der Ansprüche 1 bis 11, wobei wenigstens ein Sensor (517), ein Bildsensor ist.

13. Überwachungssystem nach einem der Ansprüche 1 bis 12, wobei wenigstens ein Sensor (518, 520), ein Mikrofon ist.

14. Überwachungssystem nach Anspruch 13, wobei wenigstens ein Mikrofon (518, 520) mit einem Kontrolleur verbunden ist, der fähig ist, eine Spracherkennung durchzuführen.

15. Überwachungssystem nach einem der Ansprüche 1 bis 14, wobei wenigstens ein Sensor (535), einen Druckknopf (540) umfasst.

16. Überwachungssystem nach einem der Ansprüche 1 bis 15, wobei wenigstens eines der Elemente (345, 347, 505, 509, 513) "Kopf externen Netzwerkes" ein ADSL und/oder WLAN router ist, der die Distanzkonnektivität auf dem Internet-Netzwerk gewährleistet.

17. Überwachungssystem nach einem der Ansprüche 1 bis 16, wobei wenigstens eines der Elemente (345) "Köpfe externen Netzwerkes" eine Schnittstelle mit einem Fernsprechnetz umfasst und fähig ist, eine Telefonnummer zusammenzusetzen.

18. Überwachungssystem nach einem der Ansprüche 1 bis 17, wobei wenigstens ein Sensor (525, 530) ein perimetrischer und/oder volumetrischer Detektor ist.

19. Verfahrensweise der Fernüberwachung, die umfasst:
- eine Phase der Maßnahme und der Behandlung einer physischen Größe,
- eine Phase zur drahtlosen Nahkommunikation zwischen zwei Elementen (345, 347, 505, 509, 513) so genannte "Köpfe externen Netzwerkes", die fähig sind, nah und fern zu kommunizieren, und
- eine Phase für die Nahkommunikation zwischen wenigstens einem Sensor und einem Element "Kopf externen Netzwerkes",
**dadurch gekennzeichnet, dass** sie umfasst
- eine erste Kommunikationsphase während der:
- ein Element "Kopf externen Netzwerkes", so genanntes Element "leader", durch sein Fernkommunikationsmittel fernkommuniziert, gemäß dem Signal, das durch wenigstens einen Sensor geliefert wurde, und
- jedes Element "Kopf externen Netzwerkes" mit Ausnahme des Leaderelement in so genannter Methode "Infrastruktur" funktioniert, bei der alle anderen Elemente mit Ausnahme des Leaderelements nur mit dem Leaderelement kommunizieren; und
- eine zweite Kommunikationsphase während der:
- ein anderes Element "Kopf externen Netzwerkes", als das Leaderelement, das Versagen des Leaderelements durch das Fehlen einer Kommunikation mit dem genannten LeaderElement feststellt, und bei Versagen des Leaderelements eine Fernmitteilung über sein Fernkommunikationsmittel sichert und
- bei Versagen des Leaderelements, die Elemente "Köpfe externen Netzwerkes" und die Sensoren in die so genannte "adhoc" Methode übergehen, in dem sie alle untereinander via ihre Mittel der Nahkommunikation kommunizieren.
